# EUROPEAN PATENT SPECIFICATION

(11) **EP 0 972 238 B1**
(45) Date of publication and mention of the grant of the patent: **12.12.2001**
(21) Application number: 98917998.1
(22) Date of filing: 01.04.1998
(51) Int. Cl.: G06F 9/44

(54) **METHOD FOR INTEGRATING A VIRTUAL MACHINE WITH INPUT METHOD EDITORS**
VERFAHREN ZUR INTEGRATION EINER VIRTUELLEN MASCHINE MIT EINGABEMETHODEEDITOREN
PROCEDE D'INTEGRATION D'EDITEURS METHODE D'ENTREE DANS UNE MACHINE VIRTUELLE

(30) Priority: 02.04.1997 US 831975; 10.02.1998 US 21089
(43) Date of publication of application: 19.01.2000
(73) Proprietor: MICROSOFT CORPORATION, Redmond, Washington 98052-6399 (US)
(72) Inventor: SILVER, David, M., Redmond, WA 98052 (US); LIN, Yung-Shin, Redmond, WA 98052 (US)
(74) Representative: McKeown, Yvonne Mary
(86) International application number: US9806664
(87) International publication number: WO9844411

(56) References cited:
- EP-A- 0 472 444
- DE-A- 3 248 631

## Description

### TECHNICAL FIELD

The present invention relates generally to extended keyboard editors, and more particularly, relates to integrating a platform-portable virtual machine with input method editors for creating composed characters, such as calligraphic ideograms in non-Latin languages including Japanese, Chinese, and Korean.

### BACKGROUND OF THE INVENTION

Global connectivity provided by the Internet will increase the demand for internationalized software products and place additional requirements on internationalized applications. For example, applications that are delivered and run over the Internet may need to adapt to the user's language at run time. Other applications will need to be multilingual and support a combination of different languages. A platform-portable programming language, JAVA, has been designed to support internationalization. The JAVA primitive character type is based on Unicode, which is an international standard for encoding written language elements.

Although JAVA includes support for Unicode strings, many text editors use double-byte character set (DBCS) encoding, and many text files contain DBCS strings rather than Unicode strings. For text files that contain DBCS strings, the source files must be converted to Unicode when compiled. In addition, DBCS strings must be converted to Unicode during read and write operations. The MICROSOFT system development tools for JAVA enhance the internationalization features of JAVA with support for DBCS encoding and MICROSOFT WINDOWS resources.

Specifically, the MICROSOFT JAVA compiler (JVC) translates DBCS literal strings in source code files to Unicode when compiling the source code into class files. When a browser with Unicode-enabled JAVA support (for example, the support in MICROSOFT INTERNET EXPLORER, version 3.0) runs these class files, the literal strings will therefore appear correctly. In addition, the MICROSOFT virtual machine allows a system developer to write JAVA-based programs that convert text strings between DBCS and Unicode.

An input method editor (IME) is a program that allows computer users to enter complex characters and symbols, such as Japanese Kanji characters, using a standard keyboard. Internationalized versions of MICROSOFT WINDOWS provide system IMEs for locales with languages using non-Latin alphabets, such as Japanese, Korean, traditional Chinese, and simplified Chinese. IMEs may also be developed for other languages, such as Russian, Arabic, Hebrew, and so forth.

At present, IME source code cannot be modified by system developers on an as-needed basis. Making IME source code alteration generally available is complicated by the fact that IMEs are implemented on many different types of platforms using different operating systems. The prospect of updating every possible operating system that might have to interact with an IME is not a practical solution.

There is, therefore, a need for a platform-portable virtual machine that allows individual developers to modify IME source code on an as-needed basis. In particular, there is a need for a system that provides IME support for JAVA applications that host JAVA-based IMEs as well as existing system IMEs.

EP-O 472444 discloses an electronic document editing system for allowing users to impart various types of button behaviour to ordinary human interprative elements of electronic documents by associating hidden persistent character string button attributes to such elements. A centralised kernel reads the appropriate button attribute character strings and establishes communications between an editor, a button handler in a button class manager and an appropriate command handler so that the action described in the button is carried out.

### SUMMARY OF THE INVENTION

The present invention meets the need for a platform-portable virtual machine that allows individual developers to modify input method editor (IME) source code on an as-needed basis by integrating a JAVA virtual machine with one or more IMEs. The JAVA programming environment can advantageously be implemented on a wide variety of platforms using different operating systems. Therefore, a system developer can use a JAVA virtual machine to modify IME source code on a wide variety of platforms using different operating systems. In addition, an IME modified on one platform may be ported to other platforms using other operating systems. The invention thus provides a platform-portable virtual machine that allows individual developers to modify IME source code on an as-needed basis.

A JAVA-based virtual machine according to the present invention supports input method editor (IME) functionality in three contexts: (1) using JAVA-based IMEs with a JAVA virtual machine; (2) writing JAVA-based IMEs; and (3) integrating a JAVA virtual machine to system IMEs. The virtual machine includes a windows manager, an input method manager, one or more IMEs and/or keyboard drivers (KBDs), and a component. The virtual machine may also include a system IME bridge for integrating the virtual machine with a system IME, and a system KBD bridge for integrating the virtual machine with a system KBD. The windows manager serves as a gateway between the operating system and the virtual machine. The input method manager (IMM) serves as a router between the windows manager and a plurality of IMEs and KBDs. The IME includes a look-up table of composed characters that are indexed by Unicode keyboard commands. The component typically renders a user interface that allows the user to manipulate the composed characters returned by the IME.

To accommodate user-definable IMEs and components, the virtual machine implements a predefined set of interfaces that allow the IMEs and components to communicate with each other and with the other elements of the virtual machine, namely the windows manager and the IMM. These predefined interfaces allow system developers to modify the functionality of IMEs and components, and to integrate the modified IMEs and components with the virtual machine. Specifically, a compatible IME implements an interface known as the Interface Method Listener Interface. The IMM implements an interface known as the Input Manager Listener Interface. The windows manager implements an interface known as the Input Method Callback Interface. And the component implements an interface known as the Input Method Message Listener Interface. A compatible IME is created by writing an IME that implements the Input Method Listener Interface. That is, creating a IME that implements the Input Method Listener Interface is necessary and sufficient for creating an IME that is compatible with a virtual machine constructed according to the present invention.

Generally described, the invention is a platform-portable virtual machine that runs on a computer system including a keyboard, a display device, a processing unit, and an operating system running on the processing unit. The virtual machine, which also runs on the processing unit, includes a windows manager that receives keyboard commands from the operating system. The input method manager receives the keyboard commands from the windows manager. The input method editor receives the keyboard commands from the input method manager and translates the keyboard commands into a composed character, such as a calligraphic ideogram or an element of a calligraphic ideogram. The component receives the composed character from the input method editor and renders the composed character for display on the display device.

More specifically, the windows manager receives a keyboard command from the keyboard and determines whether the input method manager is active. If the input method manager is not active, the windows manager passes the keyboard command to the component. If the input method manager is active, on the other hand, the windows manager passes the keyboard command to the input method manager and receives a return message from the input method manager. If the input method manager cannot handle the keyboard message, it returns a "FALSE" return message to the windows manager. The windows manager then passes the keyboard command to the component. Alternatively, the input message manager handles the keyboard command and returns "TRUE" to the windows manager.

The input method manager receives the keyboard command from the windows manager and determines whether the keyboard command is directed to the input method manager. The input method manager responds to the keyboard command if the keyboard command is directed to the input method manager responding. For example, the keyboard command may cause the input method manager to inactivate the currently-active input method editor, and to activate an alternative input method editor. If the keyboard command is not directed to the input method manager, the input method manager passes the keyboard command to the currently-active input method editor.

The input method editor receives the keyboard command from the input method manager and may combine the keyboard command with previously received keyboard commands to create a composite string. The input method editor then determines whether the composite string corresponds to a composed character. If the composite string corresponds to a composed character, the input method editor translates the composite string into the composed character and passes the composed character to the windows manager. The windows manager receives the composed character from the input method editor and passes the composed character to the component.

The component receives the composed character from the windows manager, renders a user interface on the display device, and renders the composed character on the display device in association with the user interface. The component may then receive user commands through the user interface, alter the composed character in response to the user commands, and render the altered composed character on the display device in association with the user interface.

The computer system may also include a system input method editor running on the processing unit, and the virtual machine may also include an input method editor bridge for integrating the system input method editor with the windows manager and the input method manager.

According to an aspect of the invention, the input method editor defines an interface including a first interface method for receiving a message from the input method manager instructing the input method editor to handle a keyboard command. The input method editor interface may also include a second interface method for receiving a message from the input method manager instructing the input method editor to activate. The input method editor interface may also include a third interface method for receiving a message from the input method manager instructing the input method editor to deactivate. The input method editor interface may also include a fourth interface method for receiving a message from the windows manager instructing the input method editor to handle the message.

The input method editor interface may also include a fifth interface method for receiving a message from the component instructing the input method editor to render a user interface for display on the display device. The input method editor interface may also include a sixth interface method for receiving a message from the component defining the size of the user interface rendered by the input method for display on the display device. The input method editor interface may also include a seventh interface method for receiving a message from the component defining the position of the user interface rendered by the input method for display on the display device.

According to another aspect of the invention, the input method manager defines an interface including a first interface method for receiving a message from the windows manager instructing the input method manager to activate a first input method editor. The input method manager may also include a second interface method for receiving a message from the windows manager instructing the input method manager to remove a second input method editor from a registered list of input method editors. The input method manager may also include a third interface method for receiving a message from the windows manager instructing the input method manager to identify an active input method editor. The input method manager may also include a fourth interface method for receiving a message from the windows manager instructing the input method manager to enumerate the list of registered input method editors. The input method manager may also include a fifth interface method for receiving a message from the windows manager asking the input method manager to handle a keyboard command.

According to yet another aspect of the invention, the windows manager defines an interface including an interface method for receiving messages from the input method editor. In addition, the component defines an interface including an interface method for receiving messages from the windows manager.

That the present invention improves over the drawbacks of the prior art and accomplishes the objects of the invention will become apparent from the detailed description of the exemplary embodiments to follow.

### BRIEF DESCRIPTION OF THE DRAWINGS

FIG. 1 is a schematic block diagram of the personal computer that provides the operating environment for the exemplary embodiments of the invention.
FIG. 2 is a schematic block diagram that illustrates an operating system that cooperates with a platform-portable virtual machine for integrating the operating system with a plurality of input method editors and keyboard drivers.
FIG. 3 is a logic flow diagram that illustrates a first routine for operating a windows manager within the virtual machine of FIG. 2.
FIG. 4 is a logic flow diagram that illustrates a second routine for operating a windows manager within the virtual machine of FIG. 2.
FIG. 5 is a logic flow diagram that illustrates a routine for operating an input method manager within the virtual machine of FIG. 2.
FIG. 6 is a schematic block diagram that illustrates an interface for an input method editor in accordance with an embodiment of the present invention.
FIG. 7 is a schematic block diagram that illustrates an interface for an input method manager in accordance with an embodiment of the present invention.
FIG. 8 is a schematic block diagram that illustrates an interface for a windows manager in accordance with an embodiment of the present invention.
FIG. 9 is a schematic block diagram that illustrates an interface for a component in accordance with an embodiment of the present invention.
FIG. 10A is a schematic block diagram that illustrates a prior art method for handling keyboard commands.
FIG. 10B is a schematic block diagram that illustrates a prior art for implementing an input method editor.
FIG. 11 is a schematic block diagram that illustrates a virtual machine supporting a system input method editor in accordance with an embodiment of the present invention.
FIG. 12 is a schematic block diagram that illustrates a virtual machine implementing an input method editor in accordance with an embodiment of the present invention.
FIG. 13 is a schematic block diagram that illustrates a virtual machine hosting a system input method editor in accordance with an embodiment of the present invention.

### DETAILED DESCRIPTION OF THE EXEMPLARY EMBODIMENTS

The present invention may be embodied in a virtual machine that supports IME functionality in three contexts: (1) using JAVA-based IMEs with a JAVA virtual machine; (2) writing JAVA-based IMEs; and (3) integrating a JAVA virtual machine to system IMEs. The virtual machine includes a windows manager, an IMM, one or more JAVA-based IMEs, one or more JAVA-based KBDs, and a component. The virtual machine may also include a system IME bridge for integrating the virtual machine with a system IME, and a system KBD bridge for integrating the virtual machine with a system KBD.

The windows manager serves as a gateway between the operating system and the virtual machine. As such, the windows manager receives keyboard commands from the operating system, including function commands and compound keyboard commands, such as "CTRL +" "ALT +" and "CTRL ALT +" that increase the number of characters that can be uniquely identified by a standard keyboard. The windows manager translates the keyboard commands into a standard Unicode format and routes the Unicode keyboard commands to the component or to the IMM, as appropriate. The windows manager also receives composed characters returned by an IME and routes the composed characters to the component for display and further manipulation by the user, as defined by the functionality of the component. The windows manager may also receive IME messages and route the IME messages to the component.

The IMM serves as a router between the windows manager and a plurality of IMEs and KBDs. The IMM responds to certain IMM commands, such as toggle commands, that allow a user to activate a particular IME or KBD. The IMM typically responds to an IMM command by deactivating the previously-active IME or KBD and activating the indicated IME or KBD. The IMM then routes subsequent keyboard commands to the activated IME or KBD until another IMM command is received.

The IME includes a look-up table of composed characters that are indexed by the various Unicode keyboard commands. The IME receives the Unicode messages, known as WM_IME_CHAR keyboard commands, and translates them into the corresponding composed characters. To further increase the number of characters that can be uniquely identified by a standard keyboard, the IME may be configured to index composed characters based on multiple keyboard commands. That is, the IME may combine a number of WM_IME_CHAR keyboard commands to build a Unicode composite string that corresponds to a predefined composed character. The use of multiple-keyboard command composite strings allows the IME to index thousands of individual composed characters, which is very useful for generating calligraphic ideograms in non-Latin languages, such as Japanese, Korean, and Chinese. The IME then passes the composed character to the windows manager, which passes the composed character to the component for further manipulation by the user.

The IME may also pass instructions, known as IME messages, to the windows manager. The windows manager typically passes the IME messages on to the component. IME messages typically include composition messages, such as "begin composed character" and "end composed character," that allow the IME to interact with the component. The component and the IME may be configured by system developers to handle many other IME messages on as as-needed bases. The JAVA virtual machine provides a mechanism by which the component an the IME may communicate, but the JAVA virtual machine does not dictate the functionality of the component or the IME. Nor does the JAVA virtual machine dictate the types or structure of the IME messages that may be communicated between the component and the IME. Thus, the specific IME messages are not determined by the virtual machine, but rather are left to be defined by individual system developers on an as-needed basis. The function of the virtual machine is to provide a standardized vehicle for integrating user-definable IMEs with user-definable components.

Although the component or the IME may be configured to control the IME's drawing space, the component typically renders a user interface that allows the user to alter the composed character, such as a calligraphic ideogram or element of a calligraphic ideogram, returned by the IME. Of course, the functionality of particular user-definable IMEs and components may vary from platform to platform, and from user to user. To accommodate these user-definable IMEs and components, the virtual machine implements a predefined set of interfaces that allow the IMEs and components to communicate with each other and with the other elements of the virtual machine, namely the windows manager and the IMM. These predefined interfaces allow system developers to modify the functionality of IMEs and components, and to integrate the modified IMEs and components with the virtual machine.

Central to the exemplary embodiments of invention, therefore, is the definition of a set of cooperating interfaces that allow the elements of the virtual machine to communicate with each other. A compatible IME implements an interface known as the Interface Method Listener Interface. The Interface Method Listener Interface preferably includes eight interface methods: Handle Key - instructs the IME to attempt to respond to an event (e.g., keyboard command); Handle IME message - instructs the IME to handle an IME message; Set Visible Component - tells the IME which module controls the IME's drawing space; Set Position - instructs the IME to begin drawing at a specific location; Set Size - sets the size of the graphic image that the IME will draw; Paint - instructs the IME to begin drawing a character; Activate-instructs the IME to respond to subsequent messages; and Deactivate - instructs the IME not to respond to subsequent messages (except activate).

The IMM implements an interface known as the Input Manager Listener Interface. The Input Manager Listener Interface preferably includes five interface methods: Get Input Method - instructs the IMM to identify the active IME; Get Number Input Methods - instructs the IMM to enumerate the registered IMEs; Remove Input Method - instructs the IMM to remove an IMM from the registered list of IMEs; Set Input Method - instructs the IMM to activate a particular IME; and Handled Key - allows the windows manager to pass a keyboard command to the IMM and obtain a return message from the IMM indicating whether the IMM accepted or rejected the keyboard command.

The windows manager implements an interface known as the Input Method Callback Interface. The Input Method Callback Interface preferably includes two interface methods: Handle IME Char - used by an IME to return a composed character, such as a calligraphic ideogram or an element of a calligraphic ideogram, to the windows manager; and Handle IME Message-used by an IME to pass an IME message to the windows manager.

The component implements an interface known as the Input Method Message Listener Interface. The Input Method Message Listener Interface preferably includes one interface method: Handle IME Message - used the windows manager to pass composed characters and IME messages to component.

A compatible IME is created by writing an IME that implements the Input Method Listener Interface. That is, creating a IME that implements the Input Method Listener Interface is necessary and sufficient for creating an IME that is compatible with a virtual machine constructed according to the present invention. The virtual machine may also include a system IME bridge that integrates the virtual machine with a system IME. The system IME bridge inserts flags or other command name identifiers into IME messages to prevent unwanted feedback from the system IME to the operating system. Similarly, the virtual machine may also include a system KBD bridge that integrates the virtual machine with a system KBD.

JAVA-based IMEs provide more flexibility and control than system IMEs. For example, JAVA-based IMEs can be used with any version of WINDOWS. Thus, cross-platform JAVA-based IMEs may run on any system that has the virtual machine installed. Multiple JAVA-based IMEs, based on different languages, may therefore be activated concurrently by a single JAVA application. JAVA-based IMEs can be packaged and downloaded from the Internet with applets or downloaded at the discretion of the user. Applications can control Java IME interface elements such as composition, status, and candidate windows. Secure JAVA-based IMEs follow normal JAVA security rules and run in the "sandbox" with JAVA applications.

The com.ms.util package contains the Input Method Listener interface class, which is the base class for JAVA-based IMEs. IMEs based on this class will be recognized by the IMM. The virtual machine also supports existing system IMEs enclosed in a COM wrapper interchangeably with JAVA-based IMEs. However, there are some limitations associated with using system IMEs. A JAVA-based IME may be used on any system regardless of what language the system is localized for as long as the JAVA virtual machine is installed. System IMEs, on the other hand, are limited to IMEs supported by the IMM on the host system. For example, a Korean system IME cannot run in connection with a version of WINDOWS 95 that is localized for Greece.

System IMEs are supported with the System IME class in the com.ms.util package. The System IME class implements the Input Method Listener interface by embedding a COM object to communicate directly with the system IMEs. The COM object receives keyboard command messages from the IME and routes the result of the composition to the windows manager and on to the component.

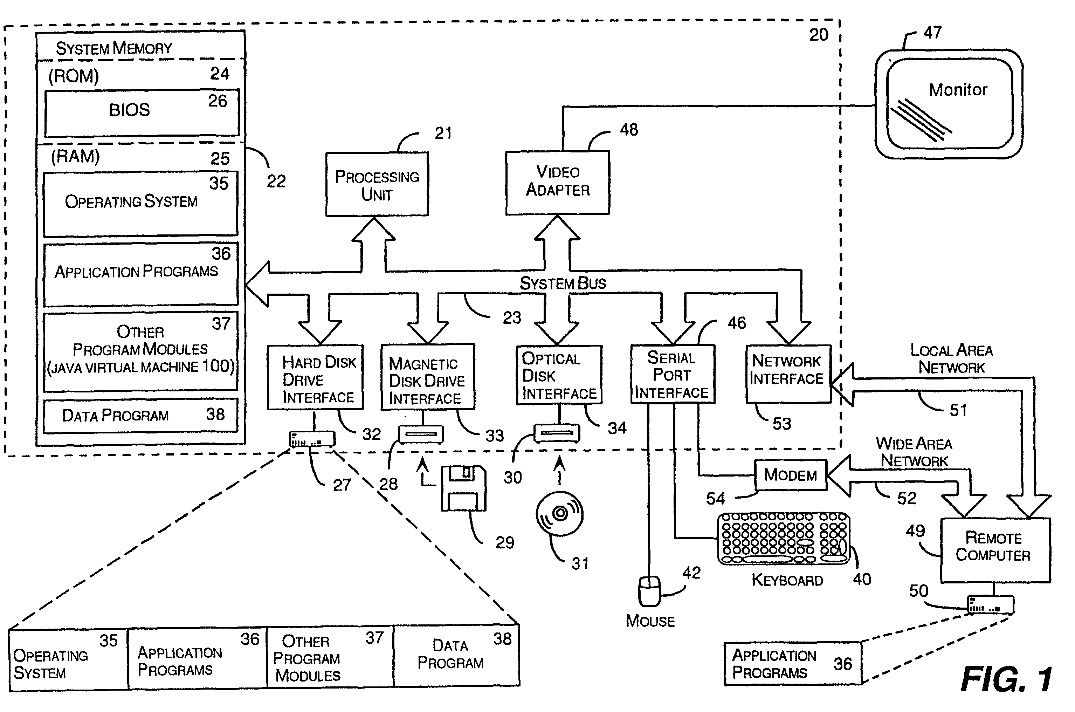

Referring now to the drawings, in which like numerals indicate like elements throughout the several figures, the exemplary embodiments of the present invention will be described below. Generally, FIG. 1 illustrates the operating environment of the disclosed embodiments of the invention.

### Exemplary Operating Environment

FIG. I and the following discussion are intended to provide a brief, general description of a suitable computing environment in which the invention may be implemented. While the invention will be described in the general context of an application program that runs on an operating system in conjunction with a personal computer, those skilled in the art will recognize that the invention also may be implemented in combination with other program modules. Generally, program modules include routines, programs, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to FIG. 1, an exemplary system for implementing the invention includes a conventional personal computer **20**, including a processing unit **21**, a system memory **22**, and a system bus **23** that couples the system memory to the processing unit **21**. The system memory **22** includes read only memory (ROM) **24** and random access memory (RAM) **25**. A basic input/output system **26** (BIOS), containing the basic routines that help to transfer information between elements within the personal computer **20**, such as during start-up, is stored in ROM **24**. The personal computer **20** further includes a hard disk drive **27**, a magnetic disk drive **28,** e.g., to read from or write to a removable disk **29**, and an optical disk drive **30**, e.g., for reading a CD-ROM disk **31** or to read from or write to other optical media. The hard disk drive **27**, magnetic disk drive **28**, and optical disk drive **30** are connected to the system bus **23** by a hard disk drive interface **32**, a magnetic disk drive interface **33**, and an optical drive interface **34**, respectively. The drives and their associated computer-readable media provide nonvolatile storage for the personal computer **20.** Although the description of computer-readable media above refers to a hard disk, a removable magnetic disk and a CD-ROM disk, it should be appreciated by those skilled in the art that other types of media that are readable by a computer, such as magnetic cassettes, flash memory cards, digital video disks, Bernoulli cartridges, and the like, may also be used in the exemplary operating environment.

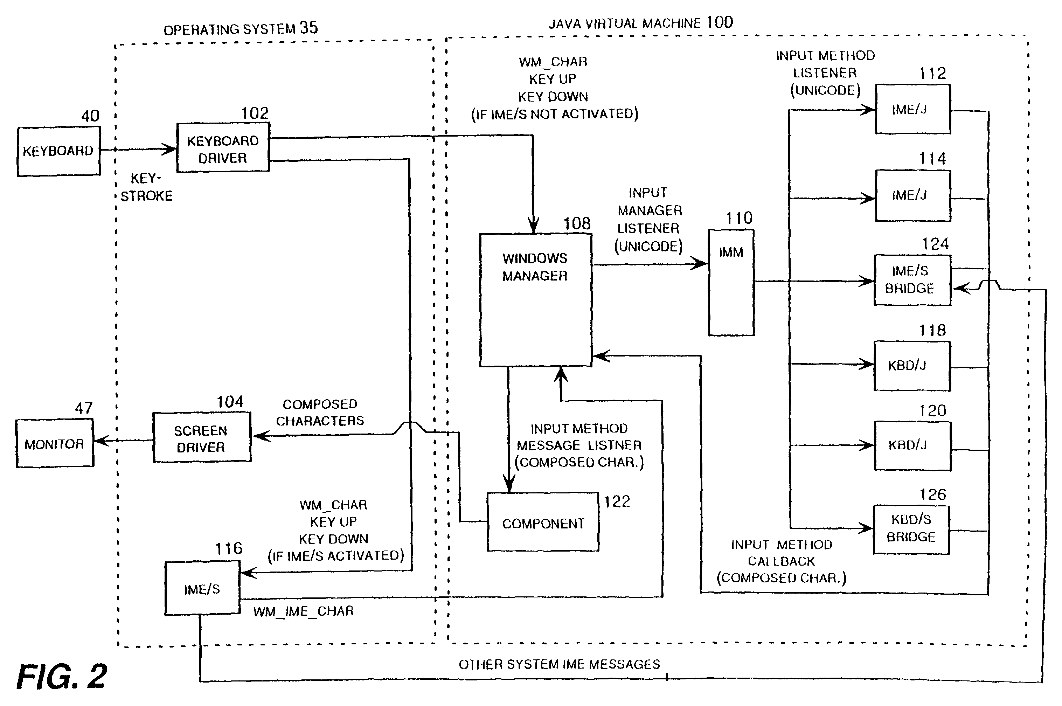

A number of program modules may be stored in the drives and RAM **25**, including an operating system **35,** one or more application programs **36**, other program modules **37,** and program data **38**. In particular, one of the other program modules **37** is a JAVA virtual machine **100** that includes certain embodiments of the invention, which are described in detail below with reference to FIGS. 2-13. JAVA, a registered trademark of SUN MICROSYSTEMS, refers to a multi-platform programming language, as is known to those skilled in the art. A user of the JAVA virtual machine **100** may enter commands and information into the personal computer **20** through a keyboard **40** and pointing device, such as a mouse **42**. Other input devices (not shown) may include a microphone, joystick, game pad, satellite dish, scanner, or the like. These and other input devices are often connected to the processing unit **21** through a serial port interface **46** that is coupled to the system bus, but may be connected by other interfaces, such as a game port or a universal serial bus (USB). A monitor **47** or other type of display device is also connected to the system bus **23** via an interface, such as a video adapter **48**. In addition to the monitor, personal computers typically include other peripheral output devices (not shown), such as speakers or printers.

The personal computer **20** may operate in a networked environment using logical connections to one or more remote computers, such as a remote computer **49.** The remote computer **49** may be a server, a router, a peer device or other common network node, and typically includes many or all of the elements described relative to the personal computer **20**, although only a memory storage device **50** has been illustrated in FIG. 1. The logical connections depicted in FIG. 1 include a local area network (LAN) **51** and a wide area network (WAN) **52.** Such networking environments are commonplace in offices, enterprise-wide computer networks, intranets and the Internet.

When used in a LAN networking environment, the personal computer **20** is connected to the LAN **51** through a network interface **53**. When used in a WAN networking environment, the personal computer **20** typically includes a modem **54** or other means for establishing communications over the WAN **52**, such as the Internet. The modem **54,** which may be internal or external, is connected to the system bus **23** via the serial port interface **46**. In a networked environment, program modules depicted relative to the personal computer **20**, or portions thereof, may be stored in the remote memory storage device. It will be appreciated that the network connections shown are exemplary and other means of establishing a communications link between the computers may be used.

### Operation of the Disclosed Embodiment

FIG. 2 is a schematic block diagram that illustrates an operating system **35** that cooperates with a JAVA virtual machine **100** including a plurality of JAVA-based input method editors represented by the IME/Js **112** and **114,** and plurality of JAVA-based keyboard drivers represented by the KBD/Js **118** and **120**. The author of a document written in calligraphic ideograms creates the calligraphic ideograms by entering predefined keyboard commands into the keyboard **40** or some other suitable type of input device. The operating system **35** receives these keyboard commands at a keyboard driver **102,** which translates the keyboard commands into keyboard commands. Each keystroke is translated into three keyboard commands that may be handled and interpreted individually: WM_KEYDOWN - indicating that a key has been depressed, WM_CHAR - typically an ASCII code or value associated with the depressed key, and WM_KEYUP - indicating that a key has been released. These keyboard commands are delivered to the JAVA virtual machine **100**.

The keyboard commands are initially received by a JAVA windows manager **108** that translates the commands into Unicode keyboard commands that are understood by the other components of the JAVA virtual machine **100**. The windows manager **108** typically consumes the WM_KEYDOWN and WM_KEYUP keyboard commands, which serve as delimiters for keyboard commands including multi-key complex keyboard commands. The windows manager **108** typically passes the Unicode translations of the WM_CHAR keyboard commands to the IMM **110**, which operates as a router between the windows component **108** and a plurality of IMEs and KBDs.

IMEs are typically used to create composed characters in non-Latin languages, such as Chinese, Korean, and Japanese. IMEs are usually quite sophisticated and often use multiple keyboard commands to define an individual composed characters. IMEs also usually operate in connection with a component that allows the user to further manipulate the composed characters generated by the IME. KBDs are relatively simple translators that are used to create characters in Latin languages, such as French, German, and Spanish. Unlike IMEs, KBDs typically use single keyboard commands and compound keyboard commands (i.e., multiple keys depressed simultaneously) to define an individual composed characters. KBDs typically do not require the functionality afforded by a component user interface. Nevertheless, KBDs could be developed with all of the sophistication and component user interface functionality usually associated with an IME.

The IMM **110** is operative for maintaining a list of registered IMEs and KBDs, and activating and deactivating the IMEs and KBDs in the registered list. For example, a first JAVA-based IME, designated as IME/J **112,** may be operative for generating calligraphic ideogram in Chinese. A second JAVA-based IME, designated as IME/J **114**, may be operative for generating calligraphic ideogram in or Japanese. In addition, a first JAVA-based KBD, designated as KBD/J **118,** may be operative for writing in French. A second JAVA-based KBD, designated as KBD/J **120**, may be operative for writing in German or Spanish. For clarity, the following discussion will refer only to the IMEs. It should be understood, however, that similar operations may be implemented for the KBDs.

The IMM **110** serves as a router between the windows manager **108** and a plurality of IMEs, represented by the IMEs **112, 114** and **116**. The IME/Js **112** and **114** represent JAVA-based IMEs and the IME/S **116** represents a system IME. To select among these IMEs **112, 114** and **116**, the IMM **110** responds to certain predefined IMM commands (e.g., toggle commands) that allow a user to select a particular IME. The IMM **110** responds to an IMM command by deactivating the previously-active IME and activating the indicated IME. The IMM **110** then routes subsequent events to the activated until another IMM command is received. For non-IMM commands, the IMM **110** routes the commands from the windows manager **108** to the active IME. The commands passed to the active IME from the IMM **108** typically include Unicode translations of WM_CHAR keyboard commands. The keyboard commands passed to the active IME from the IMM **110** may also include function commands for controlling the IME.

The implementation of the Input Method Listener Interface by the JAVA-based IME/Js **112** and **114** is necessary and sufficient for allowing the JAVA component **108** to interact properly with the IMEs. Thus, the IME/Js **112** and **114,** which are to be created by JAVA developers according to the constructs of the JAVA Virtual Machine System Development Kit (SDK), are typically programmed to communicate with the operating system **35** through the virtual machine **100.** But the operating-system-based IME/S **116,** which may have been created before or without regard to the virtual machine **100**, may be programmed to communicate directly with the operating system **35** under certain circumstances. This feedback between the IME/S **116** and the operating system **35**, which in turn supplies IME messages to windows manager **108**, can result in commands entering a continual loop between the operating system **35** and the JAVA virtual machine **100** or other unpredictable and undesirable results.

To prevent this type of feedback, the JAVA virtual machine **100** typically includes an IME/S bridge **124** that links the windows manager **108** to the system IME/S **116.** The JAVA virtual machine **100** also typically includes a system KBD/S bridge **126** that links the windows manager to a system KBD/S. The system IME/S bridge **124** and the system KBD/S bridge **126** insert flags or other command name identifiers into the commands generated by the IME/S **116** and the system KBD/S, respectively, to prevent unwanted feedback from the IME/S **116** to the operating system **35**. Specifically, the system IME/S bridge **124** and the KBD/S bridge **126** change the WM_CHAR keyboard commands to WM_IME_CHAR keyboard commands to indicate that the messages have already been processed by the system IME/S **116** or the system KBD/S, respectively.

Composed characters created by an IME are returned to the windows manager **108**, which passes the composed characters to the component **122**. The component **122** translates composed characters into operating system commands that are understood by the screen driver **104** of the operating system **35**. Specifically, the JAVA component **122** implements a sequence of commands including a "key event" command, a "post event" command, and a "key down" command to render images on the monitor **47**, as is well known to those skilled in the art.

The component **122** typically renders a user interface that includes one or more tool bars including a number of drawing tools. The user interface is displayed on the monitor **47** in association with a composed character returned by an IME. The user interface allows the component **122** to receive user commands to further manipulate the composed character. For example, the component **122** may cause a composed character received from an IME to be displayed within the user interface. The component **122** may then accept user commands created with the drawing tools of the user interface to alter or augment the composed character. The component **122** thus integrates an IME with a JAVA-based user interface for manipulating the composed characters returned by the IME. Alternatively, the virtual machine **100** allows the active IME to draw a composed character within a drawing space controlled by another program module, such as a word processor or editor.

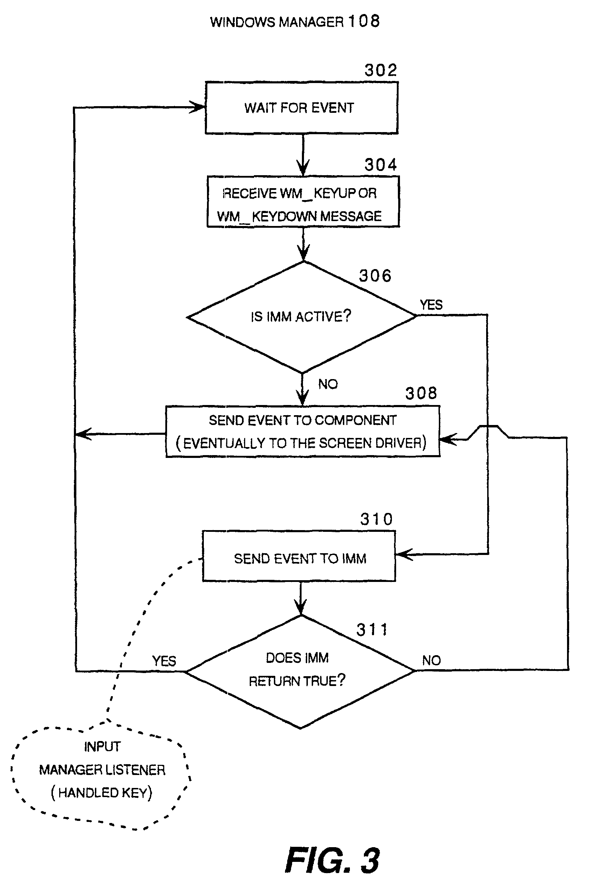

FIG. 3 is a logic flow diagram that illustrates a first routine **300** for operating the windows manager **108** within the virtual machine **100**. In step **302**, the windows manager **108** waits for an event. The windows manager **108** typically receives two types of events, keyboard commands from the operating system **35**, and IME messages, including composed characters and other system IME messages, from an IME. In step **304**, the windows manager **108** receives an event, in this case a keyboard command from the operating system.

In step **306**, the windows manager **108** determines whether the virtual machine **100** includes an active IMM, represented by the IMM **110**. If the virtual machine **100** does not include an active IMM, the "NO" branch is followed to step **308**, in which the windows manager **108** passes the Unicode translation of the keyboard command to the component **122.** If the virtual machine **100** includes an active IMM, the "YES" branch is followed to step **310**, in which the windows manager **108** passes the Unicode translation of the keyboard command to the IMM **110**.

Depending on the type of command, the IMM **110** may accept the event, or the IMM **110** may refuse the event. In step **311**, the windows manager **108** checks whether the IMM accepted the event. The windows manager **108** preferably performs this query by receiving a return message from the Handled Key method of the Input Manager Listener Interface, which was called to pass the keyboard command to the IMM **110**. If the IMM **100** returns "TRUE" indicating that the IMM accepted the event, the "YES" branch loops to step **302**, in which the windows manager **108** waits for another event. If the IMM **100** returns "FALSE" indicating that the IMM refused the event, the "NO" branch loops to step **308**, in which the windows manager **108** passes the event to the component **122**.

Following step **308,** routine **300** loops to step **302**, in which the windows manager **108** waits for another event. The query of step **311** allows certain events to be passed directly to the component **122** without first passing through the IMM **110.** Thus, the windows manager **108** processes each event by passing the event to the IMM **110,** or by passing the event to the component **122** for further processing and eventual rendering on the monitor **47**.

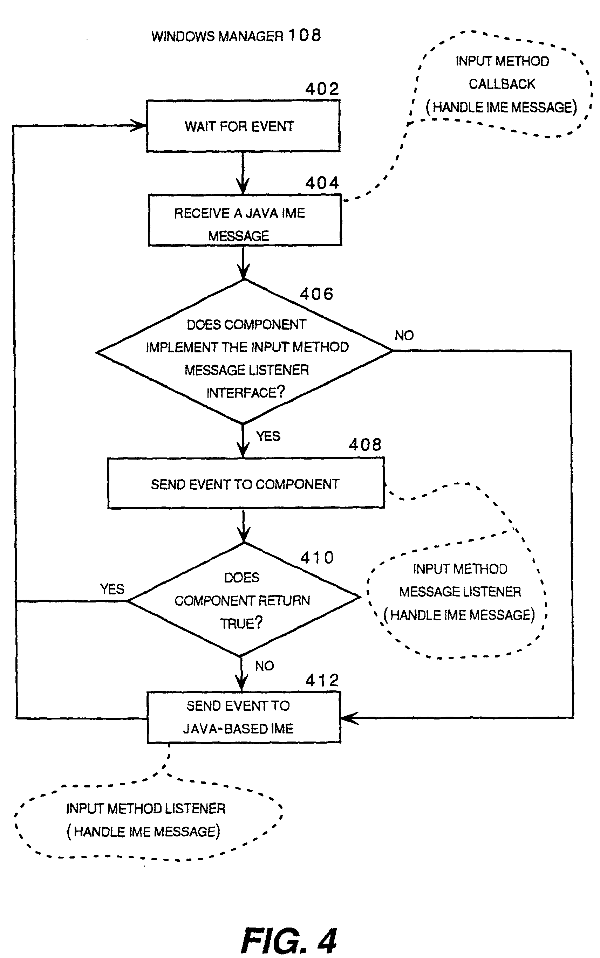

FIG. 4 is a logic flow diagram that illustrates a second method **400** for operating a windows manager within the virtual machine **100**. In step **402**, the windows manager **108** wails for an event. In step **404**, the windows manager **108** receives an event, in this case a composed character or other system IME messages from an IME. The IME preferably passes the event to the windows manager **108** by calling the Handle IME Message method of the Input Method Callback Interface.

In step **406**, the windows manager **108** determines whether the component **122** implements the Input Method Message Listener Interface. If the component **122** implements the Input Method Message Listener Interface, the "YES" branch is followed to step **408**, in which the windows manager **108** passes the event to the component **122.** The windows manager **108** preferably passes the event to the component **122** by calling the Handle IME Message method of the Input Method Message Listener Interface. If the component **122** does not implement the Input Method Message Listener Interface, the "NO" branch is followed to step **412**, in which the windows manager **108** passes the event directly to the active IME.

Referring again to step **408**, the component **122** may accept the event, or the component **122** may reject the event. If the component **122** accepts the event, the component preferably returns "TRUE" to the Handle IME Message command. If the component **122** rejects the event, the component preferably returns "FALSE" to the Handle IME Message command. In step **410**, the windows manager **108** determines whether the component **122** returns "TRUE." If the component **122** returns "TRUE," the "YES" branch loops to step **402**, in which the windows manager waits for another event. If the component **122** returns "FALSE," the "NO" branch is followed to step **412**, in which the windows manager **108** passes the event to the event to the active IME. Following step **412**, routine **400** loops to step **402**, in which the windows manager **108** waits for another event.

Routine **400** thus passes each IME message, including composed characters and other system IME commands, to the component **122** or to the active IME. Permitting the windows manager **108** to pass the IME either to the component **122** or to the active IME allows a JAVA system developer to configure either the component **122** or the IME to accept a particular IME message. The objective of this feature is to provide the JAVA system developers with flexibility in designing the components and the IME on a case-by-case basis.

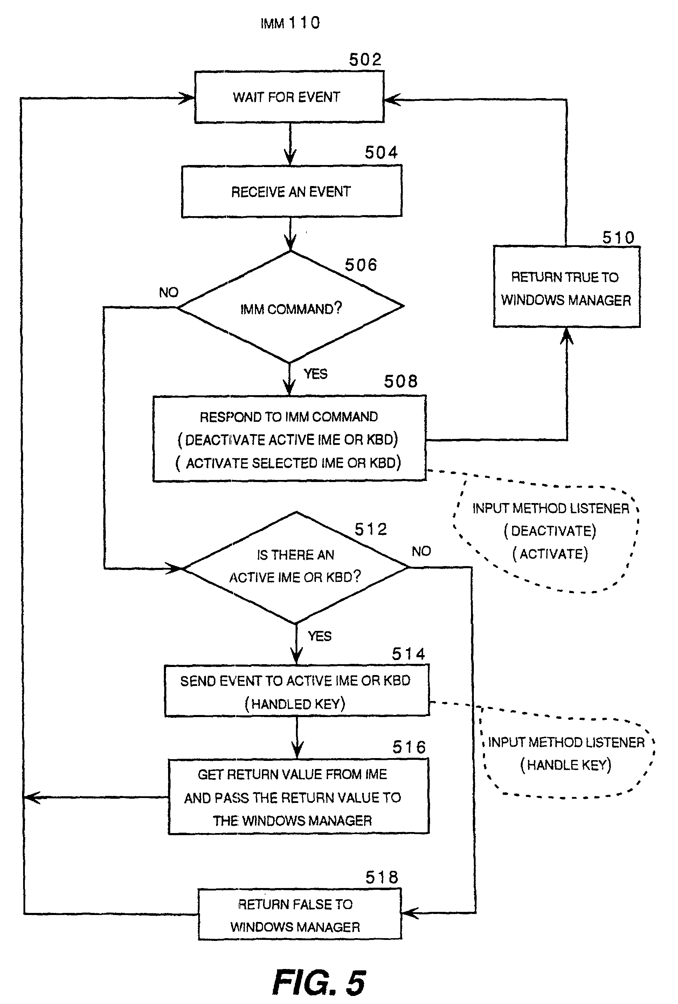

FIG. 5 is a logic flow diagram that illustrates a routine **500** for operating the IMM **110** within the virtual machine **100**. In step **502**, the IMM **110** waits for an event, typically a Unicode translation of a WM_CHAR keyboard command received from the windows manager **108**. In step **504**, the IMM **110** receives an event from the windows manager **108**. In step **506**, the IMM **110** determines whether the event is an IMM command. If the event is an IMM command, the "YES" branch is followed from step **506** to step **508**, in which the IMM **110** responds to the IMM command, for example by deactivating the previously-active IME and activating the indicated IME. The IMM preferably deactivates the previously-active IME by calling the Deactivate method of the Input Method Listener Interface, and activates the indicated IME by calling the Activate method of the Input Method Listener Interface. Step **508** is followed by step **510**, in which the IMM **110** returns "TRUE" to the windows manager **108** indicating that the event has been accepted by the IMM. After step **510**, routine **500** loops to step **502**, in which the IMM **110** waits for another event.

Referring again to step **506**, if the event is not an IMM command, the "NO" branch is followed from step **506** to step **512**, in which the IMM **110** determines whether the virtual machine **100** includes an active IME. If the virtual machine **100** includes an active IME, the "YES" branch is followed to step **412**, in which the IMM **110** passes the event to the active IME. The IMM **110** preferably passes the event to the active IMM by calling the Handle Key method of the Input Method Listener Interface. Step **514** is followed by step **510**, in which the IMM **110** returns "TRUE" to the windows manager **108** indicating that the event has been accepted by the IMM. After step **510**, routine **500** loops to step **502,** in which the IMM **110** waits for another event.

Referring again to step **512**, if the virtual machine **100** does not include an active IME, the IMM **110** returns "FALSE" to the windows manager **108** indicating that the event has been refused by the IMM. After step **516**, routine **500** loops to step **502**, in which the IMM **110** waits for another event. Thus, the IMM **100** processes each event by deactivating a previously-activated IME and activating an indicated IME (and returning "TRUE" to the windows manager **108**), passing the event to the active IME (and returning "TRUE" to the windows manager **108**), or returning "FALSE" to the windows manager **108** indicating that the IMM refused the event.

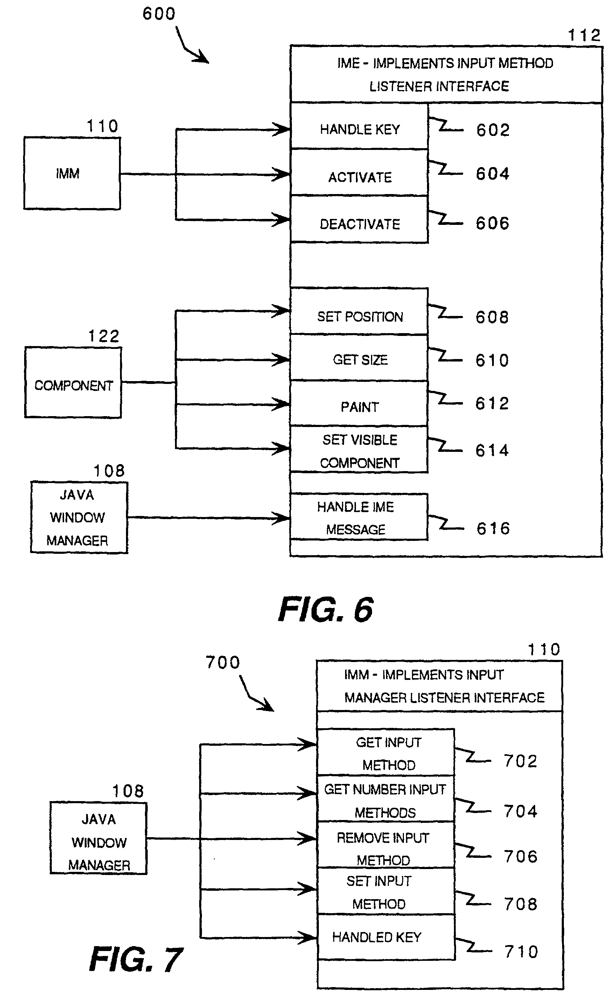

FIG. 6 is a schematic block diagram that illustrates the Input Method Listener Interface **600** implemented by an IME that is compatible with the virtual machine **100**. An IME or KBD, such as the representative IME/J **112**, must implement the Input Method Listener Interface compatible with the virtual machine **100**. The Input Method Listener Interface **600** preferably includes a first interface method HANDLE KEY **602**. The HANDLE KEY interface method **602** is called by the IMM **110** to pass a keyboard command to the IME/J **112**. For example, the keyboard command passed to the IME/J **112** may be the Unicode translation of a WM_CHAR keyboard command that was passed to the IMM **110** by the windows manager **108.** The IME/J **112** returns "TRUE" if the IME accepts the keyboard command, and returns "FALSE" if the IME does not accept the command.

The HANDLE KEY interface method **602** preferably includes five operands: "imeCallback" - identifies the callback object that implements the Input Method Callback Interface (the windows manager **108**); "when" - the time that the HANDLE KEY method was called; "keyCode" - the ASCII key code of the keyboard command; "keyChar" - the Unicode key character of the keyboard command; and "state" - the state of the virtual machine **100** when the HANDLE KEY method was called.

The Input Method Listener Interface **600** preferably includes a second interface method ACTIVATE **604**. The ACTIVATE interface method **604** is called by the IMM **110** to activate an indicated IME. The ACTIVATE interface method **604** preferably includes an operand ("ime") that indicates an IME to be activated. The ACTIVATE interface method **604** does not involve a return message.

The Input Method Listener Interface **600** preferably includes a third interface method DEACTIVATE **606**. The DEACTIVATE interface method **606** is called by the IMM **110** to deactivate the currently active IME. The ACTIVATE interface method **606** does not require an operand and does not involve a return message.

The Input Method Listener Interface **600** preferably includes a fourth interface method SET POSITION **608**. The SET POSITION interface method **608** is called by the component **122** to set the position of the composed character on the display screen of the monitor **47**. The SET POSITION interface method **608** includes operands indicating a coordinate ("x,y") on the display screen of the monitor **47.** The SET POSITION interface method **608** does not involve a return message.

The Input Method Listener Interface **600** preferably includes a fifth interface method SET SIZE **610**. The SET SIZE interface method **608** is called by the component **122** to set the size of the composed character on the display screen of the monitor **47.** The SET SIZE interface method **608** includes an operand indicating a graphics object ("g") that determines the size of the composed character on the display screen of the monitor **47**. The graphics object ("g") may also determine the font and color of the composed character as it appears on the display screen of the monitor **47**. The SET SIZE interface method **610** returns a null value.

The Input Method Listener Interface **600** preferably includes a sixth interface method PAINT **612**. The PAINT interface method **612** is called by the component **122** to cause the IME to paint a composed character on a particular graphics object. The PAINT interface method **612** includes an operand indicating the graphics object ("g"). The PAINT interface method **612** does not involve a return message.

The Input Method Listener Interface **600** preferably includes a seventh interface method SET VISIBLE COMPONENT **614.** The SET VISIBLE COMPONENT interface method **614** is called by the component **122** to set the component **122** as the object that will control the IME's drawing space. The SET VISIBLE COMPONENT interface method **614** includes an operand indicating the component ("c") that will control the IME's drawing space, in this example the component **122.** The SET VISIBLE COMPONENT interface method **614** does not involve a return message. The SET VISIBLE COMPONENT interface method **614** allows the IME to draw a composed character within a drawing space controlled by the component **122**, typically a user interface displayed on the monitor **47** that includes one or more tool bars including a number of drawing tools. If the SET VISIBLE COMPONENT interface method **614** is not called, the IME typically draws the composed character within a drawing space controlled by the IME. Alternatively, the IME may draw the composed character within a drawing space controlled by another program module, such as a word processor or editor.

The Input Method Listener Interface **600** preferably includes an eighth interface method HANDLE IME MESSAGE **616**. The HANDLE IME MESSAGE interface method **616** is called by the windows manager **108** to pass a particular IME message to the IME. The HANDLE IME MESSAGE interface method **616** includes the particular IME message as an operand. The HANDLE IME MESSAGE interface method **616** does not involve a return message. An IME message is typically generated by the IME and passed to the callback object, the windows manager **108**. If the windows manager does not handle the IME message, the windows manager passes the IME message back to the IME by calling the HANDLE IME MESSAGE interface method **616**. This gives the windows manager **108** an opportunity to handle the IME message. If the windows manager does not handle the IME message, the IME typically implements a default condition. In other words, the IME "listens" for windows manager **108** activity in responses to an IME message, and the IME implements a default condition if the windows manager **108** does not handle the IME message.

FIG. 7 is a schematic block diagram that illustrates the Input Manager Listener Interface **700** for the IMM **100** of the virtual machine **100**. The Input Manager Listener Interface **700** preferably includes a first interface method GET INPUT METHOD **702**. The GET INPUT METHOD interface method **702** is called by the windows manager **108** to ask the IMM **110** which IME is active. The GET INPUT METHOD **702** involves a return message that includes an operand ("idx") that specifies an index associated with the currently active IME.

The Input Manager Listener Interface **700** preferably includes a second interface method GET NUMBER INPUT METHODS **704**. The GET NUMBER INPUT METHODS interface method **704** is called by the windows manager **108** to ask the IMM **110** how many IMEs are registered with the IMM. The GET NUMBER INPUT METHODS interface method **704** involves a return message that enumerates the IMEs that are registered with the IMM. For example, the IMM may return a message that includes an operand that specifies the number of IMEs registered with the IMM. Alternatively, the IMM may return a list of the IMEs that are registered with the IMM.

The Input Manager Listener Interface **700** preferably includes a third interface method REMOVE INPUT METHOD **706**. The REMOVE INPUT METHOD interface method **706** is called by the windows manager **108** to ask the IMM **110** remove a particular IME from the registered list of IMEs maintained by the IMM. The REMOVE INPUT METHOD interface method **706** includes an operand ("ime") that indicates the particular IME to be removed from the registered list. The REMOVE INPUT METHOD interface method **706** does not involve a return message.

The Input Manager Listener Interface **700** preferably includes a fourth interface method SET INPUT METHOD **708.** The SET INPUT METHOD interface method **708** is called by the windows manager **108** to ask the IMM **110** to activate a particular IME on the registered list of IMEs maintained by the IMM. The SET INPUT METHOD interface method **708** includes an operand ("ime") that indicates the particular IME to be activated. The SET INPUT METHOD interface method **708** does not involve a return message.

The Input Manager Listener Interface **700** preferably includes a fifth interface method HANDLED KEY **710.** The HANDLED KEY interface method **710** is called by the windows manager **108** to ask the IMM **110** to handle a keyboard command, typically a Unicode translation of a WM_CHAR keyboard command. The HANDLED KEY interface method **710** includes an operand ("ime") that indicates the particular IME to be activated. The SET INPUT METHOD interface method **708** does not involve a return message.

The HANDLED KEY interface method **710** preferably includes five operands: "imeCallback" - identifies the callback object that implements the Input Method Callback Interface (the windows manager **108**); "when" - the time that the HANDLED KEY method was called; "keyCode" - the ASCII key code of the keyboard command; "keyChar" - the Unicode key character of the keyboard command; and "state" - the state of the virtual machine **100** when the HANDLE KEY method was called.

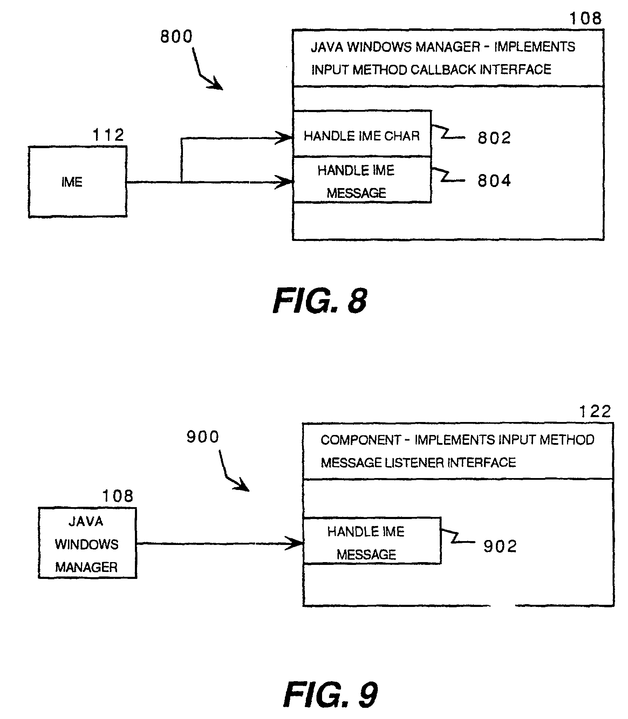

FIG. 8 is a schematic block diagram that illustrates the Input Method Callback Interface **800** for the windows manager **108** of the virtual machine **100**. The Input Method Callback Interface **800** preferably includes a first interface method HANDLE IME CHAR **802**. The HANDLE IME CHAR interface method **802** is called by an IME to pass a particular composed character to the windows manager **108**. The windows manager **108** adds the composed character, which may be based on a composite string including a number of keyboard commands, to the internal input queue as if it was a single character received from the keyboard **40**. The HANDLE IME CHAR interface method **802** includes three operands: "when" - that time that the HANDLE IME CHAR interface method **802** was called; "keyChar" - the Unicode key character of the composed character; and "state" - the state of the virtual machine **100** when the HANDLE IME CHAR interface method **802** was called. The HANDLE IME MESSAGE interface method **802** does not involve a return message.

The Input Method Callback Interface **800** preferably includes a second interface method HANDLE IME MESSAGE **804**. The HANDLE IME MESSAGE interface method **804** is called by an IME to pass a particular IME message to the windows manager **108**. The HANDLE IME MESSAGE interface method **804** includes the particular IME message as an operand. The HANDLE IME MESSAGE interface method **804** does not involve a return message. An IME message is typically generated by the IME and passed to the callback object, the windows manager **108.** If the windows manager does not handle the IME message, the windows manager passes the IME message back to the IME by calling the HANDLE IME MESSAGE interface method **616** of the Input Method Listener Interface. This gives the windows manager **108** an opportunity to handle the IME message.

FIG. 9 is a schematic block diagram that illustrates the Input Method Message Listener Interface **900** for the component **122** of the virtual machine **100**. Input Method Message Listener Interface **900** preferably includes an interface method HANDLE IME MESSAGE interface method **902** that is called by the windows manager **108**. This method is called by the windows manager **108** to ask the component **122** whether the component will draw and control a user interface that the user may use to manipulate a composed character returned by an IME. The HANDLE IME MESSAGE interface method **902** may include an IME message as an operand. The HANDLE IME MESSAGE interface method **902** involves a return message that indicates whether the component **122** will draw and control a user interface. The component **122** returns "TRUE" if the component will draw and control a user interface, and the component **122** returns "FALSE" if the component will not draw and control a user interface.

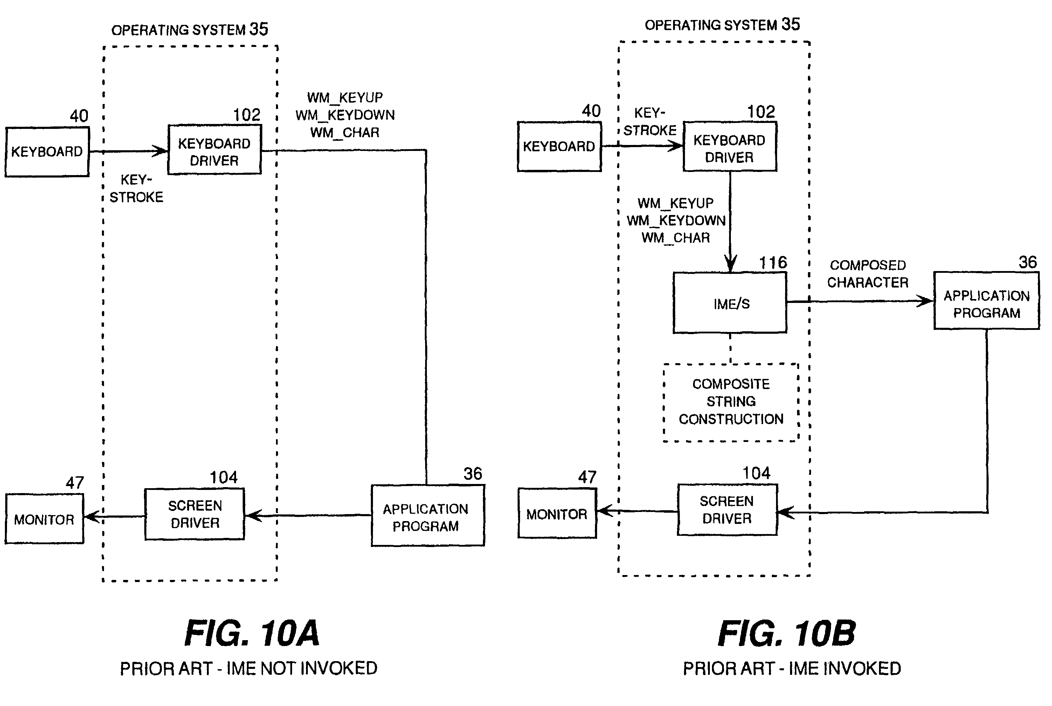

FIG. 10A is a schematic block diagram that illustrates a prior art method for handling keyboard commands. The user depresses a key on the keyboard **40**. The keyboard command is translated into keyboard commands by the keyboard driver **102**, which is typically a module of the operating system **35**. The keyboard driver **102** translates each keystroke into three keyboard commands that may be handled and interpreted individually: WM_KEYDOWN - indicating that a key has been depressed, WM_CHAR - typically an ASCII code or value associated with the depressed key, and WM_KEYUP - indicating that a key has been released. These keyboard commands are delivered to an application program **36**, such as a word processing program, an editor, or the like. The application program **36** interprets the keyboard commands in accordance with functionality defined by the application program. The application then passes a screen update to the screen driver **104**, which drives the monitor **47**.

FIG. 10B is a schematic block diagram that illustrates a prior art for implementing a system IME **116**. The user depresses a key on the keyboard **40**. The keyboard command is translated into keyboard commands by the keyboard driver **102**. The keyboard driver **102** translates each keystroke into the WM_KEYDOWN, WM_CHAR, and WM_KEYUP keyboard commands. These keyboard commands are delivered to the system IME **116,** which translates the keyboard commands into a composed character.

The system IME/S **116** is typically configured to accumulate several keyboard commands to construct a composite string for a composed character. The use of multiple-keyboard command composite strings allows the system IME/S **116** to index thousands of individual composed characters, which is very useful for generating calligraphic ideograms in non-Latin languages including Japanese, Korean, and Chinese. The system IME/S **116** then passes the composed character to the application program **36**. The application program **36** interprets the keyboard commands in accordance with functionality defined by the application program. The application then passes a screen update to the screen driver **104**, which drives the monitor **47**.

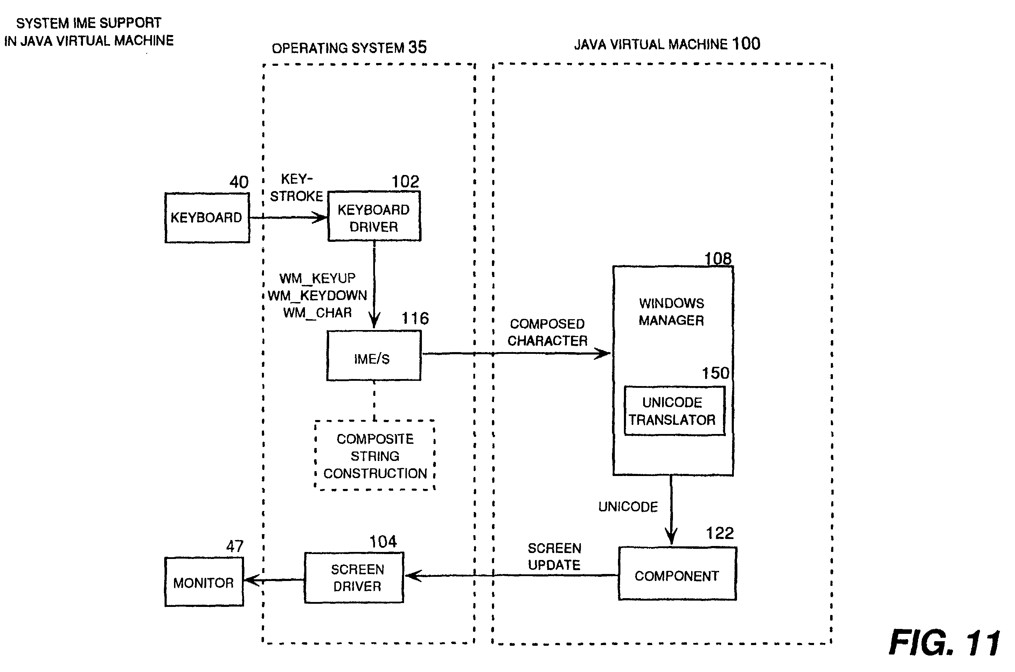

FIG. 11 is a schematic block diagram that illustrates the virtual machine **100** supporting the system IME/S **116** in accordance with an embodiment of the present invention. The user depresses a key on the keyboard **40**. The keyboard command is translated into keyboard commands by the keyboard driver **102**. The keyboard driver **102** translates each keyboard command into the WM_KEYDOWN, WM_CHAR, and WM_KEYUP keyboard commands. The keyboard commands are passed to the system IME/S **116**, which generates a composed character based on the keyboard commands.

The system IME/S **116** passes the composed character to the windows manager **108**, which includes a Unicode translator that translates the composed character into Unicode format. The windows manager **108** passes the composed character in Unicode format to the component **122**, which typically renders a user interface that allows the user to manipulate the composed character. The component **122** then passes a screen update to the screen driver **104**, which drives the monitor **47**.

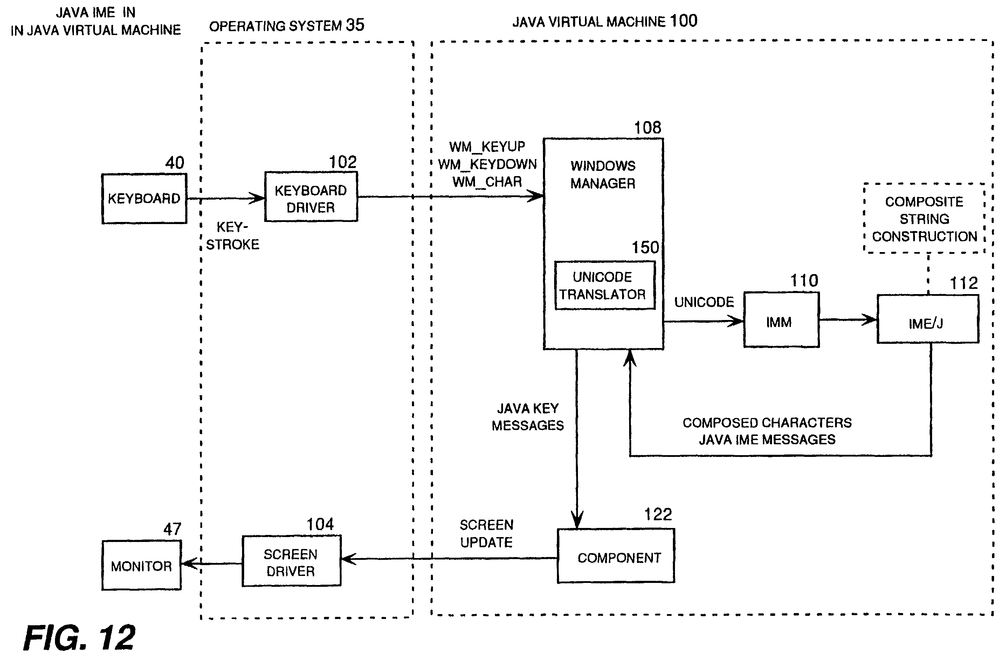

FIG. 12 is a schematic block diagram that illustrates the virtual machine **100** implementing the JAVA-based IME/J **112** in accordance with an embodiment of the present invention. The user depresses a key on the keyboard **40**. The keyboard command is translated into keyboard commands by the keyboard driver **102**. The keyboard driver **102** translates each keyboard command into the WM_KEYDOWN, WM_CHAR, and WM_KEYUP keyboard commands. These keyboard commands are delivered to the windows manager **108** of the virtual machine **100**.

The windows manager **108** includes a Unicode translator that translates the keyboard commands into Unicode format. The windows manager **108** passes the Unicode keyboard commands to the IMM **110**. The IMM **110** passes the Unicode keyboard commands to the JAVA-based IME/J **112,** which translates the Unicode keyboard commands into a composed character. The JAVA-based IME/J **112** passes the composed character back to the windows manager **108**, which passes the composed character to the component **122**. The component **122** typically renders a user interface that allows the user to manipulate the composed character. The component **122** then passes a screen update to the screen driver **104**, which drives the monitor **47.**

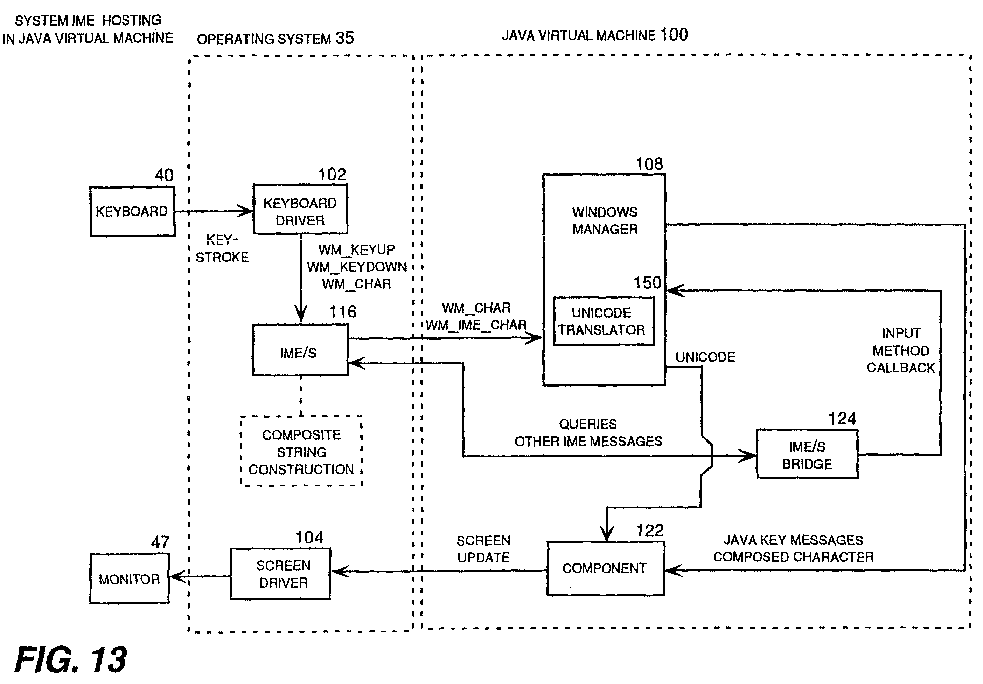

FIG. 13 is a schematic block diagram that illustrates the virtual machine **100** hosting the system IME/S **116** in accordance with an embodiment of the present invention. The user depresses a key on the keyboard **40.** The keyboard command is translated into keyboard commands by the keyboard driver **102**, which is typically a module of the operating system **35**. The keyboard driver **102** translates each keyboard command into the WM_KEYDOWN, WM_CHAR, and WM_KEYUP keyboard commands. These keyboard commands are delivered to the system IME/S **116**, which may build multiple keyboard commands into a composite string including multiple WM_CHAR and WM IME_CHAR keyboard commands.

The system IME/S **116** passes the composite string to the windows manager **108** of the virtual machine **100**. The windows manager **108** includes a Unicode translator that translates the composite string into Unicode format. The windows manager **108** passes the Unicode composite string to the system IME/S bridge **124**. The system IME/S bridge **124** changes any WM_CHAR keyboard commands to WM_IME_CHAR keyboard commands to indicate that the system IME/S **116** has already processed the composite string. The system IME/S bridge **124** may also exchange queries and other system IME messages with the system IME/S **116**. The system IME/S bridge **124** the passes the composite string back to the windows manager **108**, which passes the composed character to the component **122**. The component **122** typically renders a user interface that allows the user to manipulate the composed character. The component **122** then passes a screen update to the screen driver **104**, which drives the monitor **47**.

In view of the foregoing, it will be appreciated that the present invention provides a JAVA virtual machine that may be used to alter or augment the source code for IMEs on an as-needed basis. The present invention also defines a controlling interface for creating a JAVA-compatible IME. A JAVA-based virtual machine according to the present invention supports input method editor (IME) functionality in three contexts: (1) using JAVA-based IMEs with a JAVA virtual machine; (2) writing JAVA-based IMEs; and (3) integrating a JAVA virtual machine to system IMEs. The virtual machine includes a windows manager, an input method manager, one or more IMEs and/or KBDs, and a component. The component typically renders a user interface that allows the user to manipulate the composed characters returned by the IME. The virtual machine may also include an IME bridge for integrating the virtual machine with a system IME. The windows manager serves as a gateway between the operating system and the virtual machine. The input method manager (IMM) serves as a router between the windows manager and a plurality of IMEs and KBDs. The IME includes a look-up table of composed characters that are indexed by Unicode keyboard commands.

## Claims

1. A computer system (20) comprising a processing unit (21), a keyboard (40) coupled to the processing unit, a display device (47) coupled to the processing unit, and an operating system (35) running on the processing unit, a system input method editor (116) running on the processing unit and programmed to communicate directly with the operating system (35), a platform-portable virtual machine (100) running on the processing unit including a windows manager (108) operative for receiving keyboard commands from the operating system, **CHARACTERIZED BY**:
an input method manager (110) for receiving the keyboard commands from the windows manager (108), for responding to a keyboard command that is directed to the input method manager and for inactivating the input method editor and activating an alternative input method editor;
an input method editor (112, 114) operative for receiving the keyboard commands from the input method manager (110) and translating the keyboard commands into a composed character;
a component (112) operative for receiving the composed character from the input method editor (112, 114) and rendering the composed character for display on the display device (47); and
an input method editor bridge (124) operative for integrating the system input method editor with the virtual machine (100), and preventing undesirable feedback between the system input method editor (116) and the operating system (35).

2. The computer system of claim 1, wherein the windows manager (108) is operative for:
receiving the keyboard command from the keyboard (304);
determining whether the input method manager is active (306);
if the input method manager is not active, passing the keyboard command to the component (308); and
if the input method manager is active, passing the keyboard command to the input method manager (310), receiving a return message from the input method manager and, if the return message is a false return message, passing the keyboard command to the component (311).

3. The computer system of any of claims 1-2, wherein the input method manager (110) is operative for:
receiving the keyboard command from the windows manager (504);
determining whether the keyboard command is directed to the input method manager (506);
if the keyboard command is directed to the input method manager responding to the keyboard command (508); and
if the keyboard command is not directed to the input method manager, passing the keyboard command to the input method editor (514).

4. The computer system of any of claims 1-3, wherein the input method editor (112, 114) is operative for:
receiving the keyboard command from the input method manager (514);
combining the keyboard command with previously received keyboard commands to create a composite string;
determining whether the composite string corresponds to the composed character; and
if the composite string corresponds to the composed character,
translating the composite string into the composed character, and
passing the composed character to the windows manager (516).

5. The computer system of any of claims 1-4, wherein the windows manager (108) is further operative for:
receiving the composed character from the input method editor (404); and
passing the composed character to the component (408).

6. The computer system of any of claims 1-5, wherein the component (122) is operative for:
receiving the composed character from the windows manager (408);
rendering a user interface on the display device; and
rendering the composed character on the display device in association with the user interface.

7. The computer system of any of claims 1-6, wherein the component (122) is further operative for:
after rendering the composed character on the display device in association with the user interface, receiving user commands through the user interface, altering the composed character in response to the user commands, and rendering the altered composed character on the display device in association with the user interface.

8. The computer system of any of claims 1-7, wherein the input method editor (112, 114) defines an interface (600) comprising:
a first interface method (602) for receiving a message from the input method manager (110) instructing the input method editor to handle a keyboard command;
a second interface method (604) for receiving a message from the input method manager (110) instructing the input method editor to activate;
a third interface method (606) for receiving a message from the input method manager (110) instructing the input method editor to deactivate; and
a fourth interface method (616) for receiving a message from the windows manager (108) instructing the input method editor to handle the message.

9. The computer system of claim 8, wherein the interface (600) defined by the input method editor (112, 114) further comprises a fifth interface method (608, 610, 612, 614) for receiving a message from the component (122) instructing the input method editor to manipulate a user interface rendered by the input method editor and displayed on the display device (47).

10. The computer system of claim 8, wherein the interface (600) defined by the input method editor further comprises:
a fifth interface method (612) for receiving a message from the component (122) instructing the input method editor to render a user interface for display on the display device (47);
a sixth interface method (610) for receiving a message from the component (122) defining the size of the user interface rendered by the input method for display on the display device (47); and
a seventh interface method (618) for receiving a message from the component (122) defining the position of the user interface rendered by the input method for display on the display device (47).

11. The computer system of any of claims 1-10, wherein the input method manager (110) defines an interface (700) comprising:
a first interface method (708) for receiving a message from the windows manager (108) instructing the input method manager to activate a first input method editor (112, 114);
a second interface method (706) for receiving a message from the windows manager (108) instructing the input method manager to remove a second input method editor from a registered list of input method editors;
a third interface method (702) for receiving a message from the windows manager (108) instructing the input method manager to identify an active input method editor;
a fourth interface method (704) for receiving a message from the windows manager (108) instructing the input method manager to enumerate the registered list of input method editors; and
a fifth interface method (710) for receiving a message from the windows manager (108) asking the input method manager to handle a keyboard command.

12. The computer system of any of claims 1-11, wherein the windows manager (108) defines an interface (800) comprising an interface method (802, 804) for receiving messages from the input method editor (112, 114).

13. The computer system of any of claims 1-12, wherein the component (122) defines an interface (900) comprising an interface method (902) for receiving messages from the windows manager (108).

14. A method for operating a platform-portable virtual machine (100) running on a computer system (20) comprising a processing unit (21), a keyboard (40) coupled to the processing unit, a display device (47) coupled to the processing unit, an operating system (35) running on the processing unit, a windows manager (108) operative for receiving keyboard commands from the operating system and a system input method editor (116) running on the processing unit and configured to communicate directly with the operating system (35); **CHARACTERIZED BY** THE STEPS OF:
providing an input method editor bridge (124) operative for integrating the system input method editor with the virtual machine (100), and preventing undesirable feedback between the system input method editor (116) and the operating system (35);
providing an input method manager (110) for receiving the keyboard commands from the windows manager (108), for responding to a keyboard command that is directed to the input method manager (110) and for inactivating the input method editor and activating an alternative input method editor;
providing an input method editor (112, 114) operative for receiving the keyboard commands from the input method manager (110) and translating the keyboard commands into a composed character; and
providing a component (112) operative for receiving the composed character from the input method editor (112, 114) and rendering the composed character for display on the display device (47).

15. A method as claimed in Claim 14 comprising the further steps of
within the windows manager (108),
receiving a keyboard command from the keyboard (304),
determining whether an input method manager is active (306),
if the input method manager is not active, passing the keyboard command to a component (308), and
if the input method manager is active, passing the keyboard command to the input method manager (310), receiving a return message from the input method manager, and if the return message is a false return message, passing the keyboard command to the component (308);
within the input method manager (110),
receiving the keyboard command from the windows manager (504),
determining whether the keyboard is directed to the input method manager (506),
if the keyboard command is directed to the input method manager responding to the keyboard command (508) by performing the steps of
inactivating the input method editor; and
activating an alternative input method editor, and
if the keyboard command is not directed to the input method manager, passing the keyboard command to the system input method editor by way of the input method editor bridge (514);
within the system input method editor (112, 114),
receiving the keyboard command from the input method manager (514),
combining the keyboard command with previously received keyboard commands to create a composite string,
determining whether the composite string corresponds to a composed character, and
if the composite string corresponds to the composed character,
translating the composite string into the composed character, and
passing the composed character to the windows manager (516);
within the windows manager (108),
receiving the composed character from the system input method editor (404), and
passing the composed character to the component (408);
within the component (122),
receiving the composed character from the windows manager (108),
rendering a user interface on the display device (47), and
rendering the composed character on the display device in association with the user interface.

16. The method of claim 14 or 15, wherein the input method editor (112, 114) defines an interface (600) comprising:
a first interface method (602) for receiving a message from the input method manager (110) instructing the input method editor to handle a keyboard command;
a second interface method (604) for receiving a message from the input method manager (110) instructing the input method editor to activate:
a third interface method (606) for receiving a message from the input method manager (110) instructing the input method editor to deactivate;
a fourth interface method (616) for receiving a message from the windows manager (108) instructing the input method editor to handle the message;
a fifth interface method (608, 610, 612, 614) for receiving a message from the component (122) instructing the input method editor to render a user interface for display on the display device;
a sixth interface method (610) for receiving a message from the component (122) defining the size of the user interfaced rendered by the input method for display on the display device (47); and
a seventh interface method (618) for receiving a message from the component (122) denning the position of the user interface rendered by the input method for display on the display device (47).

17. The method of any of claims 14 to 16, wherein the input method manager (110) defines an interface (700) comprising:
a first interface method (708) for receiving a message from the windows manager (108) instructing the input method manager to activate a first input method editor (112, 114);
a second interface method (706) for receiving a message from the windows manager (108) instructing the input method manager to deactivate a second input method editor;
a third interface method (702) for receiving a message from the windows manager instructing the input method manager to identify an active input method editor; and
a fourth interface method (710) for receiving a message from the windows manager (108) instructing the input method manager to handle a keyboard command.

18. The method of claim 17, wherein the interface defined by the input method manager (110) further comprises a fifth interface method (704) for receiving a message from the windows manager (108) instructing the input method manager to enumerate a list of input method editors registered with the input method manager.

19. The method of claim 18, wherein the windows manager (108) comprises an interface (800) comprising an interface method (802, 804) for receiving messages from the input method editor (112, 114).

20. The method of claim 19, wherein the component (122) defines an interface (900) comprising an interface method (902) for receiving messages from the windows manager (108).

## Patentansprüche

1. Computersystem (20) umfassend eine Verarbeitungseinheit (21), eine Tastatur (40), die mit der Verarbeitungseinheit verbunden ist, eine Anzeigeeinrichtung (47), die mit der Verarbeitungseinheit verbunden ist und ein Betriebssystem (35), das auf der Verarbeitungseinheit läuft, ein im System vorgesehenen Editor (116) für Eingabeprozeduren (Input Method Editor), der auf der Verarbeitungseinheit läuft und programmiert ist, um direkt mit dem Betriebssystem (35) zu kommunizieren, eine Plattformportable virtuelle Maschine (100), die auf der Verarbeitungseinheit läuft und einen Windows-Manager (108) umfasst, der vorgesehen ist, um Tastaturbefehle von dem Betriebssystem zu erhalten, **gekennzeichnet durch**:
Einen Input Method Manager bzw. Eingabeprozedurenverwalter (110) zum Erhalten von Tastaturbefehlen von dem Windows-Manager (108), zum Antworten auf einen Tastaturbefehl, der dem Input Method Manager zugeleitet wird und zum Inaktivieren des Input Method Editors und Aktivieren eines alternativen Input Method Editors;
einen Input Method Editor (112, 114), der vorgesehen ist, um von dem Input Method Manager (110) Tastaturbefehle zu erhalten und die Tastaturbefehle in ein zusammengesetztes Zeichen zu übersetzen;
eine Komponente (112), die vorgesehen ist, um das zusammengesetzte Zeichen von dem Input Method Editor (112, 114) zu erhalten und das zusammengesetzte Zeichen für die Anzeige auf einer Anzeigeeinrichtung (4) bereitzustellen; und
eine Eingabe-Editorbrücke bzw. Input Method Editor Bridge (124), die vorgesehen ist, um den System Input Method Editor mit der virtuellen Maschine (100) zu integrieren und eine unerwünschte Rückkopplung zwischen dem System Input Method Editor (116) und dem Betriebssystem (35) zu verhindern.

2. Das Computersystem gemäß Anspruch 1, bei dem der Windows-Manager (108) ausgebildet ist, um:
den Tastaturbefehl von der Tastatur zu erhalten (304);
zu bestimmen, ob der Input Method Manager aktiv ist (306);
wobei, wenn der Input Method Manager nicht aktiv ist, der Tastaturbefehl zur Komponente geleitet wird (308); und
wenn der Input Method Manager aktiv ist, Weiterleiten des Tastaturbefehls zum Input Method Manager (310), Erhalten einer Antwortnachricht von dem Input Method Manager und, wenn die Antwortnachricht eine "FALSE"-Nachricht ist, Weiterleiten des Tastaturbefehls zur Komponente (311).

3. Computersystem nach einem der Ansprüche 1 bis 2, bei dem der Input Method Manager (110) konzipiert ist zum:
Erhalten des Tastaturbefehls von dem Windows-Manager (504);
bestimmen, ob der Tastaturbefehl an den Input Method Manager gerichtet ist (506) ;
wenn der Tastaturbefehl an den Input Method Manager gerichtet ist, Antworten auf den Tastaturbefehl (508); und
wenn der Tastaturbefehl nicht an den Input Method Manager gerichtet ist, Weiterleiten des Tastaturbefehls an den Input Method Editor (514).

4. Computersystem nach einem der Ansprüche 1 bis 3, bei dem der Input Method Editor (112, 114) ausgebildet ist zum:
Erhalten des Tastaturbefehls von dem Input Method Manager (514);
Kombinieren des Tastaturbefehls mit einem zuvor erhaltenen Tastaturbefehl zur Erzeugung einer zusammengesetzten Zeichenkette;
Bestimmen, ob die zusammengesetzte Zeichenkette dem zusammengesetzten Zeichen entspricht; und
wenn die zusammengesetzte Zeichenkette dem zusammengesetzten Zeichen entspricht
Übersetzen der zusammengesetzten Zeichenkette in das zusammengesetzte Zeichen und
Weiterleiten des zusammengesetzten Zeichens an den Windows Manager (516).

5. Computersystem nach einem der Ansprüche 1 bis 4, bei dem der Windows-Manager (108) weiterhin vorgesehen ist zum:
Empfangen des zusammengesetzten Zeichens von dem Input Method Editor (404); und
Weiterleiten des zusammengesetzten Zeichens zur Komponente (408).

6. Das Computersystem nach einem der Ansprüche 1 bis 5, bei dem die Komponente (122) vorgesehen ist zum:
Empfangen des zusammengesetzten Zeichens von dem Windows-Manager (408);
Bilden einer Benutzerschnittstelle auf der Anzeigeeinrichtung; und
Übergabe des zusammengesetzten Zeichens an die Anzeigeeinrichtung in Verbindung mit der Benutzerschnittstelle.

7. Computersystem nach einem der Ansprüche 1 bis 6, bei dem die Komponente (122) weiterhin konzipiert ist zum:
Nach Übergabe des zusammengesetzten Zeichens an die Anzeigeeinrichtung in Verbindung mit der Benutzerschnittstelle Empfangen von Benutzerbefehlen über die Benutzerschnittstelle, Ändern des zusammengesetzten Zeichens in Beantwortung der Benutzerbefehle, und Überlassen des geänderten zusammengesetzten Zeichens an die Anzeigeeinrichtung in Verbindung mit der Benutzerschnittstelle.

8. Das Computersystem nach einem der Ansprüche 1 bis 7, bei dem der Input Method Editor (112, 114) eine Schnittstelle (600) definiert, die umfasst:
Ein erstes Schnittstellenverfahren (602) zum Erhalten einer Nachricht von dem Input Method Manager (110), die den Input Method Editor instruiert, einen Tastaturbefehl zu verarbeiten;
ein zweites Schnittstellenverfahren (604) zum Erhalten einer Nachricht von dem Input Method Manager (110) zum Aktiveren des Input Method Editors;
ein drittes Schnittstellenverfahren (606) zum Erhalten einer Nachricht von dem Input Method Manager (110) zum Deaktivieren des Input Method Editors; und
ein viertes Schnittstellenverfahren (616) zum Erhalten einer Nachricht von dem Windows-Manager (108) zum Instruieren des Input Method Editors, eine Nachricht handzuhaben.

9. Computersystem nach Anspruch 8, bei dem die von dem Input Method Editor (112, 114) definierte Schnittstelle (600) weiterhin ein fünftes Schnittstellenverfahren (608, 610, 612, 614) umfasst, um eine Nachricht von der Komponente (122) zu erhalten, die den Input Method Editor instruiert, eine Benutzerschnittstelle zu bearbeiten bzw. manipulieren, die von dem Input Method Editor bereitgestellt und auf der Anzeigeeinrichtung (47) angezeigt wird.

10. Computersystem nach Anspruch 8, bei dem die von dem Input Method Editor definierte Schnittstelle (600) weiterhin umfasst:
Ein fünftes Schnittstellenverfahren (612) zum Erhalten einer Nachricht von der Komponente (122), die den Input Method Editor instruiert, eine Benutzerschnittstelle zur Anzeige auf der Anzeigeeinrichtung (47) bereitzustellen;
ein sechstes Schnittstellenverfahren (610) zum Erhalten einer Nachricht von der Komponente (122), die die Größe der Benutzerschnittstelle definiert, die von dem Input Method Editor zur Anzeige auf der Anzeigeeinrichtung (47) bereitgestellt wird, und
ein siebtes Schnittstellenverfahren (618) zum Erhalten einer Nachricht von der Komponente (122), die die Position der Benutzerschnittstelle definiert, die von dem Input Method Editor zur Anzeige auf der Anzeigeeinrichtung (47) bereitgestellt wird.

11. Computersystem nach einem der Ansprüche 1 bis 10, bei dem der Input Method Manager (110) eine Schnittstelle (700) mit folgenden Merkmalen definiert:
Ein erstes Schnittstellenverfahren (708) zum Erhalten einer Nachricht von dem Windows-Manager (108) zum Instruieren des Input Method Managers zum Aktivieren eines ersten Input Method Editors (112, 114);
ein zweites Schnittstellenverfahren (706) zum Erhalten einer Nachricht von dem Windows-Manager (108) zum Instruieren des Input Method Managers, einen zweiten Input Method Editor von einer registrieren Liste von Input Method Editoren zu entfernen;
ein drittes Schnittstellenverfahren (702) zum Empfangen einer Nachricht von dem Windows-Manager (108) zum Instruieren des Input Method Managers einen aktiven Input Method Editor zu identifizieren;
ein viertes Schnittstellenverfahren (704) zum Erhalten einer Nachricht von dem Windows-Manager (108) zum Instruieren des Input Method Managers, die registrierte Liste der Input Method Editoren aufzuzählen; und
ein fünftes Schnittstellenverfahren (710) zum Erhalten einer Nachricht von dem Windows-Manager (108) zum Auffordern des Input Method Managers, einen Tastaturbefehl handzuhaben.

12. Computersysteme nach einem der Ansprüche 1 bis 11, bei dem der Windows-Manager (108) eine Schnittstelle (800) bildet, die ein Schnittstellenverfahren (802, 804) zum Erhalten von Nachrichten von dem Input Method Editor (112, 114) aufweist.

13. Computersystem nach einem der Ansprüche 1 bis 12, bei dem die Komponente (122) eine Schnittstelle (900) definiert, die ein Schnittstellenverfahren (902) zum Erhalten von Nachrichten von dem Windows-Manager (108) aufweist.

14. Verfahren zum Betrieb einer Plattform-portablen virtuellen Maschine (100), die auf einem Computersystem (20) läuft, welches Computersystem eine Verarbeitungseinheit (21), eine mit der Verarbeitungseinheit verbundene Tastatur (40), eine mit der Verarbeitungseinheit verbundene Anzeigeeinrichtung (47), ein auf der Verarbeitungseinheit laufendes Betriebssystem (35), einen Windows-Manager (108) zum Erhalten von Tastaturbefehlen von dem Betriebssystem und einen im System vorgesehenen Editor für Eingabeprozeduren bzw. Input Method Editor (116) umfasst, der auf der Verarbeitungseinheit läuft und konfiguriert ist, um direkt mit dem Betriebssystem (35) zu kommunizieren, **gekennzeichnet durch** folgende Schritte:
Vorsehen einer Eingabeeditorenbrücke oder auch Input Method Editor Bridge (124), die vorgesehen ist, um den System Input Method Editor mit der virtuellen Maschine (100) zu integrieren und unerwünschte Rückkopplungen zwischen dem System Input Method Editor (116) und dem Betriebssystem (35) zu verhindern;
Vorsehen eines Eingabeverwalters oder auch Input Method Managers (110) zum Empfangen von Tastaturbefehlen von dem Windows-Manager (108) zum Antworten auf einen Tastaturbefehl, der an den Input Method Manager (110) gerichtet ist und zum Inaktivieren des Input Method Editors und Aktivieren eines anderen Input Method Editors;
Vorsehen eines Input Method Editors (112, 114), der vorgesehen ist, um Tastaturbefehle von dem Input Method Manager (110) zu erhalten und die Tastaturbefehle in ein zusammengesetztes Zeichen zu übersetzen; und
Vorsehen einer Komponente (112), die ausgebildet ist, um von dem Input Method Editor (112, 114) das zusammengesetzte Zeichen zu empfangen und das zusammengesetzte Zeichen zur Anzeige auf der Anzeigeeinrichtung (47) bereitzustellen.

15. Verfahren nach Anspruch 14, umfassend die weiteren Schritte von
innerhalb des Windows-Managers (108):
Empfangen eines Tastaturbefehls von der Tastatur (304),
Bestimmen, ob ein Input Method Manager aktiv ist (306),
wenn der Input Method Manager nicht aktiv ist, Weiterleiten des Tastaturbefehls zu einer Komponente (308), und
wenn der Input Method Manager aktiv ist, Weiterleiten des Tastaturbefehls zu dem Input Method Manager (310), Empfangen einer Antwort-Mitteilung von dem Input Method Manager und wenn die Antwort-Mitteilung eine Negativmitteilung (FALSE) ist, Weiterleiten des Tastaturbefehls zur Komponente (308),
innerhalb des Input Method Managers (110):
Erhalten des Tastaturbefehls von dem Windows-Manager (504),
Bestimmen, ob der Tastaturbefehl an den Input Method Manager (506) gerichtet ist,
wenn der Tastaturbefehl an den Input Method Manager gerichtet ist, Antworten auf den Tastaturbefehl (508) durch folgende Schritte:
Inaktivieren des Input Method Editors; und
Aktivieren eines anderen Input Method Editors, und
wenn der Tastaturbefehl nicht an den Input Method Manager gerichtet ist, Weiterleiten des Tastaturbefehls zum System Input Method Editor über die Input Method Editor Brücke (514);
innerhalb des System Input Method Editors (112, 114):
Erhalten des Tastaturbefehls von dem Input Method Manager (514),
Kombinieren des Tastaturbefehls mit vorher empfangenen Tastaturbefehlen zur Erzeugung einer zusammengesetzten Zeichenkette,
Bestimmen, ob die zusammengesetzte Zeichenkette einem zusammengesetzten Zeichen entspricht, und,
wenn die zusammengesetzte Zeichenkette dem zusammengesetzten Zeichen entspricht, Übersetzen der zusammengesetzten Zeichenkette in das zusammengesetzte Zeichen und Weiterleiten des zusammengesetzten Zeichens zum Windows-Managers (516);
innerhalb des Windows-Managers (108):
Empfangen des zusammengesetzten Zeichens von dem System Input Method Editor (404) und Weiterleiten des zusammengesetzten Zeichens zur Komponente (408);
innerhalb der Komponente (122):
Empfangen des zusammengesetzten Zeichens von dem Windows-Manager (108),
Bereitstellen bzw. Bilden einer Benutzerschnittstelle auf der Anzeigeeinrichtung (47), und
Darstellen des zusammengesetzten Zeichens auf der Anzeigeeinrichtung in Verbindung mit der Benutzerschnittstelle.

16. Verfahren nach Anspruch 14 oder 15, bei dem der Input Method Editor (112,114) eine Schnittstelle (600) bildet, umfassend:
Ein erstes Schnittstellenverfahren (602) zum Erhalten einer Nachricht von dem Input Method Manager (110) zum Instruieren des Input Method Editors, einen Tastaturbefehl handzuhaben;
ein zweites Schnittstellenverfahren (604) zum Erhalten einer Nachricht von dem Input Method Manager (110), das den Input Method Editor zur Aktivierung veranlasst;
ein drittes Schnittstellenverfahren (606) zum Erhalten einer Nachricht von dem Input Method Manager (110), das den Input Method Editor zur Deaktivierung veranlasst;
ein viertes Schnittstellenverfahren (616) zum Erhalten einer Nachricht von dem Windows-Manager (108), das den Input Method Editor zur Handhabung der Nachricht veranlasst;
ein fünftes Schnittstellenverfahren (608, 610, 612, 614) zum Erhalten einer Nachricht von der Komponente (122), die den Input Method Editor veranlasst, eine Schnittstelle zur Anzeige auf der Anzeigeeinrichtung zu bilden bzw. bereitzustellen;
ein sechstes Schnittstellenverfahren (610) zum Erhalten einer Nachricht von der Komponente (122), die die Größe der Benutzerschnittstelle definiert, die von dem Input Method Editor zur Anzeige auf der Anzeigeeinrichtung (47) bereitgestellt wird, und
ein siebtes Schnittstellenverfahren (618) zum Erhalten einer Nachricht von der Komponente (122), die die Position der Benutzerschnittstelle definiert, die durch den Input Method Editor zur Anzeige auf der Anzeigeeinrichtung (47) bereitgestellt wird.

17. Verfahren nach einem der Ansprüche 14 bis 16, bei dem der Input Method Manager (110) eine Schnittstelle (700) definiert, umfassend:
Ein erstes Schnittstellenverfahren (708) zum Erhalten einer Nachricht von dem Windows-Manager (108), die den Input Method Manager dazu instruiert, einen ersten Input Method Editor (112, 114) zu aktivieren;
ein zweites Schnittstellenverfahren (706) zum Erhalten einer Nachricht von dem Windows-Manager (108), die den Input Method Manager instruiert, einen zweiten Input Method Editor zu deaktivieren;
ein drittes Schnittstellenverfahren (702) zum Erhalten einer Nachricht von dem Windows-Manager, die den Input Method Manager dazu instruiert, einen aktiven Input Method Editor zu identifizieren; und
ein viertes Schnittstellenverfahren (710) zum Erhalten einer Nachricht von dem Windows-Manager (108), die den Input Method Manager instruiert, einen Tastaturbefehl handzuhaben.

18. Verfahren nach Anspruch 17, bei dem die von dem Input Method Manager (110) definierte Schnittstelle weiterhin ein fünftes Schnittstellenverfahren (704) enthält, zum Erhalten einer Nachricht von dem Windows-Manager (108), die den Input Method Manager zu instruiert, eine Liste von Input Method Editoren, die in dem Input Method Manager registriert sind, aufzuzählen.

19. Verfahren nach Anspruch 18, bei dem der Windows-Manager (108) eine Schnittstelle (800) umfasst, die ein Schnittstellenverfahren (802, 804) zum Empfangen von Mitteilungen von dem Input Method Editor (112, 114) beinhaltet.

20. Verfahren nach Anspruch 19, bei dem die Komponente (122) eine Schnittstelle (900) definiert, die ein Schnittstellenverfahren (902) zum Erhalten von Mitteilungen von dem Windows-Manager (108) umfasst.

## Revendications

1. Système informatique (20) comprenant une unité de traitement (21), un clavier (40) raccordé à l'unité de traitement, un écran de visualisation (47) raccordé à l'unité de traitement, et un système d'exploitation (35) fonctionnant sur l'unité de traitement, un éditeur de méthode d'entrée de système (116) fonctionnant sur l'unité de traitement et programmé pour communiquer directement avec le système d'exploitation (35), une machine virtuelle (100) transportable d'une plate-forme à une autre fonctionnant sur l'unité de traitement et incluant un gestionnaire de fenêtres (108) opérant pour recevoir des commandes de clavier du système d'exploitation, **caractérisé par**:
un gestionnaire de méthode d'entrée (110) destiné à recevoir les commandes de clavier délivrées par le gestionnaire de fenêtres (108), à répondre à une commande de clavier qui est dirigée vers le gestionnaire de méthode d'entrée et à inactiver l'éditeur de méthode d'entrée et à activer un autre éditeur de méthode d'entrée;
un éditeur de méthode d'entrée (112, 114) opérant pour recevoir les commandes de clavier délivrées par le gestionnaire de méthode d'entrée (110) et traduire les commandes de clavier en un caractère composé;
un composant (112) opérant pour recevoir le caractère composé délivré par l'éditeur de méthode d'entrée (112, 114) et restituer le caractère composé sur l'écran de visualisation (47); et
une passerelle d'éditeur de méthode d'entrée (124) opérante pour intégrer l'éditeur de méthode d'entrée de système à la machine virtuelle (100), et empêcher une rétroaction indésirable entre l'éditeur de méthode d'entrée de système (116) et le système d'exploitation (35).

2. Système informatique selon la revendication 1, **caractérisé en ce que** le gestionnaire de fenêtres (108) est opérant pour:
recevoir la commande de clavier délivrée le clavier (304);
déterminer si le gestionnaire de méthode d'entrée est actif (306);
si le gestionnaire de méthode d'entrée n'est pas actif, transmettre la commande de clavier au composant (308); et
si le gestionnaire de méthode d'entrée est actif, transmettre la commande de clavier au gestionnaire de méthode d'entrée (310), recevoir un message de retour du gestionnaire de méthode d'entrée et, si le message de retour est un message de retour erroné, transmettre la commande de clavier au composant (311).

3. Système informatique selon l'une des revendications 1 et 2, **caractérisé en ce que** le gestionnaire de méthode d'entrée (110) est opérant pour:
recevoir la commande de clavier délivrée par le gestionnaire de fenêtres (504);
déterminer si la commande de clavier est dirigée vers le gestionnaire de méthode d'entrée (506);
si la commande de clavier est dirigée vers le gestionnaire de méthode d'entrée, répondre à la commande de clavier (508); et
si la commande de clavier n'est pas dirigée vers le gestionnaire de méthode d'entrée, transmettre la commande de clavier à l'éditeur de méthode d'entrée (514).

4. Système informatique selon l'une quelconque des revendications 1 à 3, **caractérisé en ce que** l'éditeur de méthode d'entrée (112, 114) est opérant pour:
recevoir la commande de clavier délivrée par le gestionnaire de méthode d'entrée (514);
combiner la commande de clavier avec des commandes de clavier déjà reçues pour créer une suite composite;
déterminer si la suite composite correspond au caractère composé; et
si la suite composite correspond au caractère composé,
traduire la suite composite en le caractère composé, et
transmettre le caractère composé au gestionnaire de fenêtres (516).

5. Système informatique selon l'une quelconque des revendications 1 à 4, **caractérisé en ce que** le gestionnaire de fenêtres (108) est en outre opérant pour:
recevoir le caractère composé de l'éditeur de méthode d'entrée (404); et
transmettre le caractère composé au composant (408).

6. Système informatique selon l'une quelconque des revendications 1 à 5, **caractérisé en ce que** le composant (122)) est opérant pour:
recevoir le caractère composé du gestionnaire de fenêtres (408);
restituer une interface utilisateur sur l'écran de visualisation; et
restituer le caractère composé sur l'écran de visualisation en association avec l'interface utilisateur.

7. Système informatique selon l'une quelconque des revendications 1 à 6, **caractérisé en ce que** le composant (122) est en outre opérant pour:
après restitution du caractère composé sur l'écran de visualisation en association avec l'interface utilisateur, recevoir des commandes de l'utilisateur par l'intermédiaire de l'interface utilisateur, modifier le caractère composé en réponse des commandes de l'utilisateur, et restituer le caractère composé modifié sur l'écran de visualisation en association avec l'interface d'utilisateur.

8. Système informatique selon l'une quelconque des revendications 1 à 7, **caractérisé en ce que** l'éditeur de méthode d'entrée (112, 114) définit une interface (600) comprenant:
une première méthode d'interfaçage (602) pour recevoir un message du gestionnaire de méthode d'entrée (110) commandant l'éditeur de méthode d'entrée de traiter une commande de clavier;
une deuxième méthode d'interfaçage (604) pour recevoir un message du gestionnaire de méthode d'entrée (110) commandant l'activation de l'éditeur de méthode d'entrée;
une troisième méthode d'interfaçage (606) pour recevoir un message du gestionnaire de méthode d'entrée (110) commandant la désactivation de l'éditeur de méthode d'entrée; et
une quatrième méthode d'interfaçage (616) pour recevoir un message du gestionnaire de fenêtres (108) commandant l'éditeur de méthode d'entrée de traiter le message.

9. Système informatique selon la revendication 8, **caractérisé en ce que** l'interface (600) définie par l'éditeur de méthode d'entrée (112, 114) comprend en outre une cinquième méthode d'interfaçage (608, 610, 612, 614) pour recevoir un message du composant (122) commandant l'éditeur de méthode d'entrée d'agir sur une interface d'utilisateur restituée par l'éditeur de méthode d'entrée et visualisée sur l'écran de visualisation (47).

10. Système informatique selon la revendication 8, **caractérisé en ce que** l'interface (600) définie par l'éditeur de méthode d'entrée comprend en outre:
une cinquième méthode d'interfaçage (612) pour recevoir un message du composant (122) commandant l'éditeur de méthode d'entrée de restituer une interface utilisateur sur l'écran de visualisation (47);
une sixième méthode d'interfaçage (610) pour recevoir un message du composant (122) définissant la taille de l'interface utilisateur restituée par l'éditeur de méthode d'entrée sur l'écran de visualisation (47); et
une septième méthode d'interfaçage (618) pour recevoir un message du composant (122) définissant la position de l'interface utilisateur restituée par l'éditeur de méthode d'entrée sur l'écran de visualisation (47).

11. Système informatique selon l'une quelconque des revendications précédentes 1 à 10, **caractérisé en ce que** le gestionnaire de méthode d'entrée (110) définit une interface (700) comprenant:
une première méthode d'interfaçage (708) pour recevoir un message du gestionnaire de fenêtres (108) commandant le gestionnaire de méthode d'entrée d'activer un premier éditeur de méthode d'entrée (112, 114);
une deuxième méthode d'interfaçage (706) pour recevoir un message du gestionnaire de fenêtres (108) commandant le gestionnaire de méthode d'entrée de retirer un deuxième éditeur de méthode d'entrée d'une liste référencée d'éditeurs de méthode d'entrée;
une troisième méthode d'interfaçage (702) pour recevoir un message du gestionnaire de fenêtres (108) commandant le gestionnaire de méthode d'entrée d'identifier un éditeur de méthode d'entrée actif;
une quatrième méthode d'interfaçage (704) pour recevoir un message du gestionnaire de fenêtres (108) commandant le gestionnaire de méthode d'entrée d'établir la liste référencée des éditeurs de méthode d'entrée; et
une cinquième méthode d'interfaçage (710) pour recevoir un message du gestionnaire de fenêtres (108) demandant au gestionnaire de méthode d'entrée de traiter une commande de clavier.

12. Système informatique selon l'une quelconque des revendications 1 à 11, **caractérisé en ce que** le gestionnaire de fenêtres (108) définit une interface (800) comprenant une méthode d'interfaçage (802, 804) pour recevoir des messages de l'éditeur de méthode d'entrée (112, 114).

13. Système informatique selon l'une quelconque des revendications 1 à 12, **caractérisé en ce que** le composant (122) définit une interface (900) comprenant une méthode d'interfaçage (902) pour recevoir des messages du gestionnaire de fenêtres (108).

14. Procédé d'exploitation d'une machine virtuelle (100) transportable d'une plate-forme à une autre fonctionnant sur un système informatique (20) comprenant une unité de traitement (21), un clavier (40) raccordé à l'unité de traitement, un écran de visualisation (47) raccordé à l'unité de traitement, un système d'exploitation (35) fonctionnant sur l'unité de traitement, un gestionnaire de fenêtres (108) opérant pour recevoir des commandes de clavier délivrées par le système d'exploitation et un éditeur de méthode d'entrée de système (116) fonctionnant sur l'unité de traitement et configuré pour communiquer directement avec le système d'exploitation (35); **caractérisé par** les étapes consistant à:
prévoir une passerelle d'éditeur de méthode d'entrée (124) opérante pour intégrer l'éditeur de méthode d'entrée de système à la machine virtuelle (100) et empêcher une rétroaction indésirable entre l'éditeur de méthode d'entrée de système (116) et le système d'exploitation (35);
prévoir un gestionnaire de méthode d'entrée (110) pour recevoir les commandes de clavier délivrées par le gestionnaire de fenêtres (108), pour répondre à une commande de clavier qui est dirigée vers le gestionnaire de méthode d'entrée (110) et pour inactiver l'éditeur de méthode d'entrée et activer un autre éditeur de méthode d'entrée;
prévoir un éditeur de méthode d'entrée (112, 114) opérant pour recevoir les commandes de clavier délivrées par le gestionnaire de méthode d'entrée (110) et traduire les commandes de clavier en un caractère composé; et
prévoir un composant (112) opérant pour recevoir le caractère composé de l'éditeur de méthode d'entrée (112, 114) et restituer le caractère composé sur l'écran de visualisation (47).

15. Procédé selon la revendication 14 comprenant les étapes supplémentaires consistant à,
dans le gestionnaire de fenêtres (108),
recevoir une commande de clavier du clavier (304),
déterminer si le gestionnaire de méthode d'entrée est actif (306),
si le gestionnaire de méthode d'entrée n'est pas actif, transmettre la commande de clavier à un composant (308), et
si le gestionnaire de méthode d'entrée est actif, transmettre la commande de clavier au gestionnaire de méthode d'entrée (310), recevoir un message de retour du gestionnaire de méthode d'entrée, et si le message de retour est un message de retour erroné, transmettre la commande de clavier au composant (308);
dans le gestionnaire de méthode d'entrée (110),
recevoir la commande de clavier du gestionnaire de fenêtres (504),
déterminer si la commande de clavier est dirigée vers le gestionnaire de méthode d'entrée (506),
si la commande de clavier est dirigée vers le gestionnaire de méthode d'entrée,
répondre à la commande de clavier (508) en réalisant les étapes consistant à
inactiver l'éditeur de méthode d'entrée, et
activer un autre éditeur de méthode d'entrée, et
si la commande de clavier n'est pas dirigée vers le gestionnaire de méthode d'entrée, transmettre la commande de clavier à l'éditeur de méthode d'entrée de système par la passerelle d'éditeur de méthode d'entrée (514);
dans l'éditeur de méthode d'entrée (112, 114),
recevoir la commande de clavier délivrée par le gestionnaire de méthode d'entrée (514),
combiner la commande de clavier avec les commandes de clavier déjà reçues pour créer une suite composite,
déterminer si la suite composite correspond à un caractère composé, et si la suite composite correspond au caractère composé,
traduire la suite composite en le caractère composé, et
transmettre le caractère composé au gestionnaire de fenêtres (516);
dans le gestionnaire de fenêtres (108),
recevoir le caractère composé de l'éditeur de méthode d'entrée de système (404), et
transmettre le caractère composé au composant (408);
dans le composant (122),
recevoir le caractère composé du gestionnaire de fenêtres (108),
restituer une interface utilisateur sur 1' écran de visualisation (47), et
restituer le caractère composé sur l'écran de visualisation en association de l'interface utilisateur.

16. Procédé selon la revendication 14 ou 15, **caractérisé ce que** l'éditeur de méthode d'entrée (112, 114) définit une interface (600) comprenant:
une première méthode d'interfaçage (602) pour recevoir un message du gestionnaire de méthode d'entrée (110) commandant l'éditeur de méthode d'entrée de traiter une commande de clavier;
une deuxième méthode d'interfaçage (604) pour recevoir un message du gestionnaire de méthode d'entrée (110) commandant l'activation de l'éditeur de méthode d'entrée:
une troisième méthode d'interfaçage (606) pour recevoir un message du gestionnaire de méthode d'entrée (110) commandant de désactiver l'éditeur de méthode d'entrée;
une quatrième méthode d'interfaçage (616) pour recevoir un message du gestionnaire de fenêtres (108) commandant l'éditeur de méthode d'entrée de traiter le message;
une cinquième méthode d'interfaçage (608, 610, 612, 614) pour recevoir un message du composant (122) commandant l'éditeur de méthode d'entrée de restituer une interface utilisateur sur l'écran de visualisation;
une sixième méthode d'interfaçage (610) pour recevoir un message du composant (122) définissant la taille de l'interface utilisateur restituée par l'éditeur de méthode d'entrée sur l'écran de visualisation (47); et
une septième méthode d'interfaçage (610) pour recevoir un message du composant (122) définissant la position de l'interface utilisateur restituée par l'éditeur de méthode d'entrée sur l'écran de visualisation (47).

17. Procédé selon l'une quelconque des revendications 14 à 16, **caractérisé en ce que** le gestionnaire de méthode d'entrée (110) définit une interface (700) comprenant:
une première méthode d'interfaçage (708) pour recevoir un message du gestionnaire de fenêtres (108) commandant le gestionnaire de méthode d'entrée d'activer le premier éditeur de méthode d'entrée (112, 114);
une deuxième méthode d'interfaçage (706) pour recevoir un message du gestionnaire de fenêtres (108) commandant le gestionnaire de méthode d'entrée de désactiver un deuxième éditeur de méthode d'entrée;
une troisième méthode d'interfaçage (702) pour recevoir un message du gestionnaire de fenêtres commandant le gestionnaire de méthode d'entrée d'identifier un éditeur de méthode d'entrée actif; et
une quatrième méthode d'interfaçage (710) pour recevoir un message du gestionnaire de fenêtres (108) commandant le gestionnaire de méthode d'entrée de traiter une commande de clavier.

18. Procédé selon la revendication 17, **caractérisé en ce que** l'interface définie par le gestionnaire de méthode d'entrée (110) comprend en outre une cinquième méthode d'interfaçage (704) pour recevoir un message du gestionnaire de fenêtres (108) commandant le gestionnaire de méthode d'entrée d'établir une liste d'éditeurs de méthode d'entrée référencée par le gestionnaire de méthode d'entrée.

19. Procédé selon la revendication 18, **caractérisé en ce que** le gestionnaire de fenêtres (108) comprend une interface (800) comprenant une méthode d'interfaçage (802, 804) pour recevoir des messages de l'éditeur de méthode d'entrée (112, 114).

20. Procédé selon la revendication 19, **caractérisé en ce que** le composant (122) définit une interface (900) comprenant une méthode d'interfaçage (902) pour recevoir des messages du gestionnaire de fenêtres (108).
